Europäisches Patentamt

European Patent Office

Office européen des brevets

(11) Veröffentlichungsnummer: **0 451 239 B1**

(12) **EUROPÄISCHE PATENTSCHRIFT**

(45) Veröffentlichungstag der Patentschrift: **21.06.95**

(51) Int. Cl.[6]: **B29C 47/92**, B29C 49/04

(21) Anmeldenummer: **90915299.3**

(22) Anmeldetag: **27.10.90**

(86) Internationale Anmeldenummer:
**PCT/DE90/00824**

(87) Internationale Veröffentlichungsnummer:
**WO 91/06418 (16.05.91 91/11)**

(54) **VERFAHREN ZUM HERSTELLEN VON HOHLKÖRPERN AUS THERMOPLASTISCHEM KUNSTSTOFF.**

(30) Priorität: **01.11.89 DE 3936301**

(43) Veröffentlichungstag der Anmeldung:
**16.10.91 Patentblatt 91/42**

(45) Bekanntmachung des Hinweises auf die
Patenterteilung:
**21.06.95 Patentblatt 95/25**

(84) Benannte Vertragsstaaten:
**AT BE CH DE DK ES FR GB GR IT LI LU NL SE**

(56) Entgegenhaltungen:
**EP-A- 0 004 281      EP-A- 0 026 828
EP-A- 0 027 575      EP-A- 0 334 448
EP-A- 0 334 449      US-A- 3 865 528
US-A- 4 338 071**

**Conference Proceedings of the New York
ANTEC '89, Society of Plastic Engineers47th
Annual Technical Conference Exhibits, 1.-4.
Mai 1989, H. Schrand:"Adaptive control loops reduce scrap", Seiten 952-953**

**Idem.**

**Kunststoffe, Band 70, Nr. 9, September 1980,
(München, DE), R. Hegele et
al.:"Gewichtsregelung an kontinuierlich extrudierenden Blasformanlagen", Sei-
ten522-524**

(73) Patentinhaber: **Krupp Kautex Maschinenbau
GmbH
Kautexstrasse 54
D-53229 Bonn (DE)**

(72) Erfinder: **KIEFER, Erich
Siebengebirgsstr. 30
D-5300 Bonn 3 (DE)**
Erfinder: **KLÜSENER, Peter
Im Vogelsang 7
D-5300 Bonn 2 (DE)**

(74) Vertreter: **Koepsell, Helmut, Dipl.-Ing.
Mittelstrasse 7
D-50672 Köln (DE)**

## Beschreibung

Die Erfindung betrifft ein Verfahren zum Herstellen von Hohlkörpern aus thermoplastischem Kunststoff gemäß dem Oberbegriff des Patentanspruchs 1.

Eine dafür vorgesehene Extrusionsblasformmaschine weist eine Extrusionseinheit und eine Blasformeinheit auf, deren jeweilige Arbeitsabläufe aufeinander abgestimmt werden müssen.

Eine derartige Extrusionseinheit weist wenigstens einen kontinuierlich laufenden Extruder zum Plastifizieren des im allgemeinen granulatförmigen Kunststoffmaterials und einen Extrusionskopf auf, in welchem wenigstens ein Speicherraum zum Speichern des plastifizierten Materials und wenigstens ein zwischen zwei Endpositionen hubartig hin- und herbewegbares Mittel zum Entleeren des Speicherraums angeordnet sind. Dabei sind im allgemeinen der Speicherraum ringförmig und das Mittel zum Entleeren des Speicherraums als Ringkolben ausgebildet. Deshalb wird zur Vereinfachung im folgenden überwiegend von einem Ringkolben gesprochen, ohne daß damit eine Einschränkung verbunden sein soll.

Bei der diskontinuierlichen Bildung der Vorformlinge können in Abhängigkeit von der Hubbewegung des Ringkolbens innerhalb des Extrusionskopfes während eines Arbeitszyklus' zwei Betriebsphasen unterschieden werden. In der einen Betriebsphase, der Füll- oder Speicherphase, wird der Speicherraum unter Verdrängung des Ringkolbens mit plastifiziertem Material gefüllt, bis der Ringkolben seine Endposition am Ende des Füllvorganges erreicht. In der folgenden Betriebsphase, der Ausstoß- oder Entleerungsphase, wird das gespeicherte Material unter Einwirkung des durch Antriebsmittel bewegten Ringkolbens aus dem Speicherraum ausgestoßen und in Richtung auf die Austrittsöffnung des Extrusionskopfes verdrängt, wobei das plastifizierte Material durch einen Verbindungskanal fließt, der zwischen Speicherraum und Austrittsöffnung angeordnet ist. Während dieser zweiten Betriebsphase wird das ausgestoßene Material für den Vorformling überwiegend durch die Verdrängung des Materials aus dem Speicherraum durch den Ringkolben gebildet. Es kommt allerdings ein Materialanteil hinzu, der von dem kontinuierlich laufenden Extruder während des Ausstoßhubes in den Extrusionskopf gefördert wird. Das Volumen des insgesamt aus dem Extrusionskopf austretenden Materials setzt sich demnach aus einem Volumenanteil, welcher zuvor in dem wenigstens einen Speicherraum gespeichert war, und einem Volumenanteil zusammen, welcher während der Ausstoßzeit von dem wenigstens einen Extruder in den Extrusionskopf gefördert wird. Der ununterbrochene Betrieb des das Material plastifizierenden Extruders ist erwünscht, damit sich dessen Betriebszustand stabilisieren kann. Am Ende des Entleerungsvorgangs erreicht der Ringkolben seine andere Endposition.

Der während des Ausstoßvorgangs gebildete Vorformling, der im allgemeinen vertikal an der Austrittsöffnung des Extrusionskopfs hängt, wird von einer wenigstens zweigeteilten Blasform aufgenommen. Dabei wird zumindest ein Teilbereich des Volumen-Mittelabschnitts des den Vorformling bildenden Volumen-Gesamtabschnitts innerhalb des Formnestes der Blasform unter innerem Überdruck aufgeweitet. Die Endabschnitte des Volumengesamtabschnitts werden als Abfallmaterial durch einen Abquetschvorgang abgequetscht, an welchem die Blasformteile teilnehmen, so daß das Abfallmaterial außerhalb des Formnestes verbleibt. Nach dem Aufweiten des Volumen-Mittelabschnitts wird der gebildete Hohlkörper gekühlt, bis er eine ausreichende Steifigkeit aufweist, so daß er beim Herausnehmen aus der Blasform seine Form behält.

Die Zykluszeit eines Arbeitszyklus' einer derartigen Blasformeinheit setzt sich demnach im wesentlichen aus Aufnahmezeit, Aufweitzeit, Kühlzeit und Entnahmezeit und Bewegungszeiten der Blasformteile zusammen, wobei ggf. noch weitere zusätzlich erforderliche Zeiten zu berücksichtigen sind, die jedem Fachmann bekannt sind und daher nicht weiter aufgeführt werden. Es ist bekannt, daß sich insbesondere die Kühlzeit auf die Dauer des gesamten Arbeitszyklus' auswirkt. Da die für die anderen Bewegungabläufe der Blasform benötigten Zeiten ebenfalls nicht ohne weiteres frei wählbar sind, wird üblicherweise die Zykluszeit der Blasformeinheit als Zykluszeit der gesamten Extrusionsblasformmaschine genommen.

Damit liegt auch die Zykluszeit für den Arbeitszyklus der zugeordneten Extrusionseinheit fest, da anzustreben ist, daß während eines Arbeitszyklus' der Blasformeinheit ein Vorformling hergestellt wird. In dem Fall, daß einem Kopf zwei oder mehrere Blasformeinheiten zugeordnet sind, entspricht die Zykluszeit für die Extrusionseinheit einem entsprechenden Bruchteil der Zykluszeit einer Blasformmaschine. Es können auch mehrere Extruder in einer Extrusionseinheit vorgesehen sein, wobei sich dies in der Regel auf eine Verringerung der benötigten Förderleistungen der einzelnen Extruder auswirkt. Im folgenden wird jedoch überwiegend von einem Extruder, dem eine Blasformeinheit zugeordnet ist, gesprochen, ohne daß damit eine Einschränkung verbunden sein soll.

Besonders günstig verläuft der Herstellungsprozeß in der Weise, daß der Vorformling möglichst genau dann ausgestoßen wird, wenn die Blasform zur Aufnahme desselben bereit ist. Davon abweichende Arbeitsabläufe der Blasformeinheit oder der Extrusionseinheit führen zu einer Verringerung der Produktivität und ggf. auch zu einer Verschlechterung der Qualität der Erzeugnisse.

In vielen Fällen ist es bei der Herstellung von Hohlkörpern mittels Extrusionsblasformen zweckmäßig, ggf. sogar erforderlich, die Wanddicke des Vorformlings während des Ausstoßvorganges z. B. dahingehend zu beeinflussen, daß die Bereiche des Vorformlings, die bei dem späteren Aufweiten desselben unter innerem Überdruck eine große Streckung erfahren, eine größere Wandstärke erhalten als jene Stellen, die nur wenig aufgeweitet werden. Dadurch können an die jeweiligen Erfordernisse angepaßte Hohlkörper, insbesondere solche mit im wesentlichen gleichbleibender Wandstärke hergestellt werden. Dies wird dadurch erreicht, daß die Breite der im allgemeinen ringförmigen Austrittsöffnung des Extrusionskopfes in bekannter Weise, z. B. mittels eines bewegbaren Innenteils, erweitert oder verengt wird. Zur Bewegung des Innenteils wird dabei ein Wanddickenprogrammierer benutzt, der während der Entleerungsphase, also während des vom Ringkolben ausgeführten Entleerungshubes, das Innenteil der Austrittsöffnung in Abhängigkeit vom zurückgelegten Weg des Ringkolbens in eine vorbestimmte Stellung bringt, die der jeweils gewünschten Wandstärke entspricht. Dabei wird vorausgesetzt, daß im allgemeinen eine konstante Ausstoßgeschwindigkeit des Ringkolbens und eine konstante Förderleistung des Extruders gegeben sind. Ein Verfahren zum Herstellen von Hohlkörpern aus thermoplastischem Material im Blasverfahren, bei welchem die Vorformlinge diskontinuierlich unter Verwendung eines Wanddickenprogrammierers hergestellt werden, ist in der DE-AS 25 44 609 offenbart.

Insbesondere bei der Verwendung von Wanddickensteuerungen muß sichergestellt sein, daß der Vorformling mit dem gewünschten Volumen von der Extrusionseinheit ausgestoßen wird, da anderenfalls die vorbestimmte Wanddickenverteilung entlang der Längserstreckung des Vorformlings relativ zum Formnest der Blasform verschoben wird, so daß ein Hohlkörper mit unzutreffender Wandstärkenverteilung entsteht.

Der Arbeitsablauf der Extrusionseinheit ist im allgemeinen so auf den Arbeitsablauf der Blasformeinheit einzustellen, daß innerhalb der Zeit eines Arbeitszyklus' einmal das für einen Vorformling erforderliche Volumen von dem Extruder plastifiziert wird. Aus dieser Bedingung ist lediglich die Förderleistung des üblicherweise kontinuierlich laufenden Extruders bestimmt. Zur Durchführung des einleitend beschriebenen Verfahrens sowie zur Auslegung des dafür benötigten Extrusionskopfes müssen noch weitere Betriebsgrößen für den Arbeitsablauf bestimmt werden, z. B. das Volumen des zu speichernden Materials, das durch den Hub des Ringkolbens innerhalb des Speicherraums eingestellt wird, und die Ausstoßgeschwindigkeit des Ringkolbens.

Bei der Einstellung dieser Betriebsgrößen ist darauf zu achten, daß das insgesamt aus der Austrittsöffnung austretende Material nicht nur dem Material entspricht, welches im Speicherraum in der Füllphase gesammelt wird. Vielmehr setzt es sich, wie bereits erwähnt, aus dem zuvor gespeicherten Material und dem während der Ausstoßphase von dem Extruder in den Extrusionskopf geförderten Material zusammen. Das Volumen des im Speicherraum zu sammelnden Materialanteils ist demnach so bemessen, daß es zusammen mit dem während der Ausstoßphase vom Extruder geförderten Materialanteil das Volumen ergibt, welches den Vorformling bildet.

Im folgenden wird das gesamte Volumen, welches den Vorformling bildet, mit Brutto-Volumen bezeichnet, welches demnach dem Materialvolumen des aufgeweiteten Hohlkörpers zuzüglich dem Materialvolumen des Abfallmaterials entspricht.

Es ist allgemein bekannt, daß aufgrund der im allgemeinen relativ engen Austrittsöffnung und des Verhaltens des Kunststoffes beim Austreten aus dieser Öffnung nicht beliebig hohe Austrittsgeschwindigkeiten des Materials eingestellt werden können, ohne daß unter Umständen auf der Oberfläche des Vorformlings Fließmarkierungen oder dgl. entstehen mit der Folge, daß der fertige Hohlkörper nicht die erforderliche Qualität bezüglich seiner Oberflächenbeschaffenheit aufweist. Demzufolge wird für die Austrittsgeschwindigkeit ein Geschwindigkeitsbereich gewählt, der für den jeweiligen Kunststoff bei gegebener Austrittsöffnung geeignet ist. Da während der Ausstoßphase einmal das erforderliche Brutto-Volumen aus der Austrittsöffnung austreten soll, kann mittels der geeigneten Austrittsgeschwindigkeit die Zeit, innerhalb welcher der Ausstoßvorgang stattfindet, bestimmt werden.

Die Zykluszeit der Extrusionseinheit kann demnach in zwei aufeinanderfolgende Zeitabschnitte, die Speicherzeit und die Ausstoßzeit, unterteilt werden. Durch den Arbeitsablauf der zugeordneten Blasformeinheit wird weiterhin der Zeitpunkt vorgegeben, zu welchem der Ausstoßvorgang frühestens beginnen kann, da erst zu diesem Zeitpunkt sich die unterteilte Blasform in ihrer Bereitstellung, in welcher sie den Vorformling aufnehmen kann, befindet. Dies ist deshalb wichtig, weil sich die Schließeinheit der Blasform in vielen Fällen fortwährend unter der Austrittsöffnung des Extrusionskopfes befindet, so daß ein Austreten des plastifizierten Materials bei noch geschlossener Blasform zu erheblichen Maschinenstörungen und/oder Arbeitsablaufstörungen führen kann.

Aus diesen drei Betriebsgrößen, nämlich Brutto-Volumen, Zykluszeit und Ausstoßzeit, die dem Extrusionsprozeß aufgrund des herzustellenden Vorformlings, des Arbeitsablaufs der Blasformeinheit und der Materialeigenschaft des thermoplastischen Kunststoffes vorgegeben sind, lassen sich die anderen Betriebsgrößen des idealen Extrusionsprozesses bestimmen.

Das Volumen des zu speichernden Materials ergibt sich aus der Menge Material, die während der Speicherzeit, die der Differenz zwischen Zyklus- und Ausstoßzeit entspricht, von dem Extruder in den Extrusionskopf gefördert wird. Da der Kolben und dementsprechend der Speicherraum einen konstanten Querschnitt haben, liegt somit die Länge des Hubes fest, den der Kolben während der Speicherphase aufgrund dessen Verdrängung durch das plastifizierte Material ausführt. Diesen Hub muß der Ringkolben während der Ausstoßphase innerhalb der Ausstoßzeit in Richtung auf die Austrittsöffnung zurücklegen, so daß dessen Ausstoßgeschwindigkeit aus dieser Bedingung ermittelt werden kann.

Das zu speichernde Volumen ist dabei kleiner als das insgesamt aus dem Extrusionskopf austretende Volumen, wobei, wenn der Extrusionsprozeß entsprechend diesen Soll-Werten verläuft, während der Ausstoßphase gerade die Menge Material von dem Extruder plastifiziert wird, die der Differenz zwischen dem erforderlichen Volumen für einen Vorformling und dem gespeicherten Material entspricht.

Das zur Erläuterung der Erfindung angezogene Brutto-Volumen des Vorformlings ergibt sich aus dem Gewicht des herzustellenden Hohlkörpers zusammen mit den Abfallstücken, die am Aufweitprozeß nicht teilnehmen. Da die Dichte des thermoplastischen Kunststoffes in Abhängigkeit von der Temperatur und des Druckes Änderungen erfährt, weist dieselbe Masse des Kunststoffes während des Extrusionsprozesses unterschiedliche Volumen auf. Das Brutto-Volumen stellt daher eine abstrakte Größe dar, die am Ende des Fertigungsprozesses durch eine Gewichtskontrolle des insgesamt ausgestoßenen Materials überprüft werden kann. Das Brutto-Volumen zur Beschreibung des Prozesses ist deshalb vorteilhaft, weil die einstellbaren Betriebsgrößen des Extrusionsprozesses, nämlich Hub des Kolbens und Geschwindigkeit des Kolbens, während der Ausstoßphase ebenfalls geometrische Größen darstellen. In jedem Fall ist ein direkter Zusammenhang zwischen dem erforderlichen Gewicht und dem eingestellten Brutto-Volumen gegeben, da bei zu niedrigem Gewicht des gesamten Vorformlings davon auszugehen ist, daß das gewählte Brutto-Volumen zu niedrig ist und umgekehrt.

Es ist bei dem Betrieb einer Extrusionseinheit zu berücksichtigen, daß das System, welches den Extrusionskopf und den wenigstens einen Extruder aufweist, Einflüssen unterliegt, die nicht vorhersehbar und nicht immer bestimmbar sind. Dabei handelt es sich unter anderem um Schwankungen der Temperatur und um Abweichungen der physikalischen Eigenschaften des zu verarbeitenden Kunststoffes von den Soll-Werten. Beide Einflüsse können beispielsweise zu Schwankungen der Viskosität des Kunststoffes im System führen, die sich insbesondere auch auf die Leistung des Extruders, also dessen Materialförderung pro Zeiteinheit, auswirken.

Nicht zuletzt aufgrund der vorbeschriebenen Einflüsse unterliegt das Extrusionsblasformverfahren, wie alle anderen technischen Verfahren, im allgemeinen mehr oder weniger großen Schwankungen und damit Ungenauigkeiten bezüglich eines einzuhaltenden vorgegebenen Soll-Betriebszustandes. Demzufolge werden die Beschaffenheiten der durch diesen Prozeß hergestellten Produkte ebenfalls Schwankungen aufweisen, die teilweise erhebliche Qualitätsminderungen bewirken können. Es sind daher Regeleinrichtungen erforderlich, welche die Abweichungen einzelner Vorrichtungen zur Durchführung des angewandten Verfahrens von einem einzuhaltenden Soll-Wert erfassen und entsprechende Veränderung der geregelten Betriebsgröße zur Anpassung an diesen Soll-Wert bewirken.

Aus der Druckschrift "Conference Proceedings of the New York ANTEC '89; Society of Plastic Engineers 47th Annual Technical Conference Exhibits, May 1-4 1989; H. Schrand: Adaptive Control Loops Reduce Scrap", Seiten 952 und 953 ist ein Extrusions-Blasverfahren bekannt, bei welchem die Vorformlinge diskontinuierlich hergestellt werden und zum vorgegebenen Zeitpunkt des Ausstoßbeginns, zu dem die Blasform für die Aufnahme des Vorformlings bereit ist, die Position des Ringkolbens erfaßt und die sich daraus ergebende Ist-Position mit einer vorgegebenen Soll-Position verglichen wird. Bei einer ein bestimmtes Maß überschreitenden Abweichung des Ist-Wertes vom Soll-Wert erfolgt eine Änderung der Drehzahl des Extruders. Bei diesem bekannten Verfahren wird weiterhin die optimale Zeit für das Füllen des Speichers gemessen. Wenn die gemessene Füllzeit von der optimalen Füllzeit abweicht, wird ebenfalls die Drehzahl des Extruders geändert, um dessen Förderleistung entsprechend anzupassen. In beiden Fällen wird der Vergleich vom Ist-Wert mit dem Soll-Wert jedoch erst nach Ende des Füllvorganges durchgeführt. Dies hat den Nachteil zur Folge, daß erst in einem der folgenden Arbeitszyklen kontrolliert werden kann, ob das gewünschte Ergebnis erreicht worden ist, so daß im allgemeinen mehrere Arbeitszyklen erforderlich sind, um den Soll-Betriebszustand wieder zu erreichen. Die bis dahin hergestellten Vorformlinge und somit auch die daraus gefertigten Hohlkörper werden demnach nicht die gewünschte Qualität aufweisen können.

Ferner wird in "Kunststoffe", Band 70, Nr. 9, September 1980, Seiten 522 bis 524 von R. Hegele eine "Gewichtsregulierung an kontinuierlich extrudierenden Blasformanlagen" beschrieben, bei welcher das Ist-Gewicht eines Hohlkörpers mit dem Soll-Gewicht verglichen wird und in Abhängigkeit vom Ergebnis des Vergleiches die Spaltbreite der Austrittsöffnung des Extrusionskopfes verstellt wird. Abgesehen von der Tatsache, daß es sich hier um ein Verfahren handelt, bei welchem die Vorformlinge nicht absatzweise, sondern kontinuierlich extrudiert werden, wird der Vergleich zwischen Ist-Wert und Soll-Wert erst zu einem so späten Zeitpunkt, nämlich nach Herstellen des Hohlkörpers durchgeführt, daß Auswirkungen der durchgeführten Änderungen erst nach einigen Arbeitszyklen eintreten können.

Es ist zweckmäßig und aus der DE-OS 28 13 241 bekannt, den Extrusionskopf so auszubilden, daß das Maximalvolumen des Speicherraumes etwas größer ist als das Volumen, das bei Herstellung von Vorformlingen gespeichert werden muß. Dies bedeutet, daß der zur Herstellung eines Vorformlings für einen bestimmten Hohlkörper vom Ringkolben auszuführende Hub etwas kleiner ist als der durch den Speicherraum vorgegebene maximal mögliche Hub. In bekannter Weise wird dabei das Volumen des für den jeweiligen Vorformling zu speichernden Materialanteils dadurch eingestellt, daß im Bereich des maximal möglichen Hubes die Endpositionen der Hubbewegung des Ringkolbens und damit dessen Hub festgelegt werden, der somit normalerweise kleiner ist als der maximale Hub. Somit kann derselbe Kopf, der ein relativ teures Investitionsgut darstellt, für unterschiedliche Blasformen verwendet werden, für welche unterschiedliche Vorformlinge mit unterschiedlichen Brutto-Volumen erforderlich sind. Im Falle einer Abweichung der Förderleistung des Extruders, d.h., wenn das zu speichernde Volumen zu früh oder zu spät plastifiziert ist, kann bei einem derartigen Extrusionskopf zum Soll-Beginn der Ausstoßphase der Kolben in der Regel einen Hub mit der eingestellten Länge durchführen, da der Extrusionskopf ein Ausgleichsvolumen aufweist, aus welchem bei zu niedriger Förderleistung zusätzliches Material entnommen oder in welchen bei zu hoher Förderleistung überschüssiges Material gespeichert werden kann.

Als Nachteil der bekannten Verfahren hat sich herausgestellt, daß der Füllzustand des Speicherraums nur einmal während eines Arbeitszyklus' erfaßt wird, ohne daß dabei erkannt werden kann, auf welche Art und Weise eine ggf. festgestellte Abweichung entstanden ist. Hat z. B. der Ringkolben seine Soll-Position nicht erreicht, weil der Extruder nur für einen kurzen Moment einen Leistungseinbruch, z. B. infolge eines fehlerhaften Nachrutschens des Granulats im zugeordneten Einfülltrichter hatte, wird bei den bekannten Regelungen die Förderleistung des Extruders erhöht werden, obwohl die Förderleistung wieder dem Soll-Wert entspricht. Dies hat zur Folge, daß im nächsten Zyklus der Ringkolben seine Soll-Position viel zu früh erreicht, so daß mehrere Eingriffe notwendig sind, um den Prozeß zu stabilisieren. Weiterhin wird bei bekannten Verfahren die Menge des während der Ausstoßphase in den Extrusionskopf geförderten Materials nicht ausreichend berücksichtigt, so daß den steigenden Anforderungen an die Genauigkeit der herzustellenden Hohlkörper nicht ausreichend Rechnung getragen werden kann.

Die Erfindung geht aus von dem Stand der Technik gemäß der auf H. Schrand zurückgehenden Veröffentlichung "Adaptive Control Loops Reduce Scrap", die auch im Oberbegriff des Anspruches 1 berücksichtigt ist.

Ihr liegt die Aufgabe zugrunde, ein Verfahren zum Herstellen von Hohlkörpern aus thermoplastischem Kunststoff im Extrusions-Blasverfahren der einleitend beschriebenen Art verfügbar zu machen, das die vorstehend angeführten Nachteile vermeidet oder zumindest merklich reduziert. Insbesondere soll die Erfindung die Produktivität derartiger Maschinen dahingehend verbessern, daß möglichst wenig Hohlkörper, die nicht den Qualitätsanforderungen entsprechen, hergestellt werden. Darüberhinaus soll das Verfahren gemäß der Erfindung es ermöglichen, das Einrichten, also das Vorbereiten einer Maschine für die Produktion eines bestimmten Hohlkörpers, zu vereinfachen.

Diese Aufgabe wird erfindungsgemäß durch ein Verfahren nach dem Anspruch 1 gelöst.

Vorteilhafte Weiterbildungen der Erfindung sind in den abhängigen Ansprüchen 2 bis 23 beschrieben.

Bei Auftreten einer Abweichung wird somit in Abhängigkeit von deren Ausmaß noch während desselben Arbeitszyklus' wenigstens eine Betriebsgröße und/oder eine Vorgabe für eine Betriebsgröße des anschließenden Ausstoßvorganges derart verändert, daß im wesentlichen das vorbestimmte Brutto-Volumen des Vorformlings ausgestoßen wird.

Dazu werden zumindest einmal während des Füllvorganges der zurückgelegte Weg des Ringkolbens und/oder die Geschwindigkeit, mit welcher der Ringkolben von dem plastifizierten Material in der Speicherphase verdrängt wird, erfaßt und innerhalb der zentralen Steuer- und Regeleinheit mit zugeordneten Soll-Werten verglichen. Die Geschwindigkeit des Ringkolbens während des Füllvorganges wird dabei als Maß für die Förderleistung des Extruders genommen. Zweckmäßig wird es dabei sein, die Geschwindigkeit und den zurückgelegten Weg des Ringkolbens zur Erhöhung der Genauigkeit mehrmals während der Füllphase oder wenigstens über einen Teilabschnitt der Füllphase kontinuierlich zu erfassen.

Durch diese erfindungsgemäße Maßnahme werden mit einfachen Mitteln der Zeitablauf des Arbeitszyklus der Extrusionseinheit und die Förderleistung des wenigstens einen Extruders, die durch den zurückgelegten Weg und die Geschwindigkeit des Ringkolbens wiedergegeben werden, zumindest während eines bestimmten Zeitabschnitts der Füllphase überwacht. Eventuelle Abweichungen von den jeweiligen Soll-Werten werden daher rechtzeitig erkannt, so daß ein frühzeitiger Regeleingriff auf entsprechende Betriebsgrößen erfolgen kann.

Durch diese Erfassung der Betriebszustände kann in vorteilhafter Weise der Extrusionsprozeß dahingehend optimiert werden, daß noch in demselben Arbeitszyklus, in welchem die Abweichung festgestellt worden ist, ein Eingriff auf Betriebsgrößen erfolgen kann, um noch einen Vorformling mit dem vorgegebenen Brutto-Volumen zu erzeugen. Die Einleitung eines Eingriffs sollte dabei vorteilhaft nur bis zu einem Zeitpunkt und in einer Weise erfolgen, daß Auswirkungen des Eingriffs noch in demselben Arbeitszyklus überwacht werden können. Insbesondere wird eine Anpassung der Betriebsgrößen darauf hinauslaufen, daß unabhängig von der Art und dem Zeitpunkt des Auftretens einer Abweichung ein Vorformling ausgestoßen wird, der das erforderliche Brutto-Volumen mit größtmöglicher Genauigkeit aufweist, wobei die Zykluszeit nicht oder nur geringfügig beeinflußt wird. Dadurch wird eine gleichbleibende Qualität des Hohlkörpers bei hoher Produktivität gewährleistet.

Zur Anpassung erforderliche Eingriffe auf Betriebsgrößen können dabei nicht nur die Förderleistung des Extruders, sondern beispielsweise auch die Länge des durchzuführenden Hubes des Ringkolbens oder die Ausstoßgeschwindigkeit des Ringkolbens in der anschließenden Ausstoßphase betreffen. Die letztgenannten Eingriffe haben den Vorteil, daß sie im Gegensatz zu einem Eingriff auf das relativ langsam reagierende Extrudersystem sich direkt auf den jeweiligen Ausstoßvorgang nahezu ohne Zeitverzögerung auswirken.

Weiterhin besteht ein Vorteil darin, daß die Förderleistung des Extruders direkt erfaßt wird, so daß ein stabiler Betriebszustand des letzteren, der in der Regel erwünscht ist, erkannt und aufrechterhalten werden kann. Dadurch werden häufige Eingriffe auf die Betriebsgrößen des Extruders vermieden, so daß dieser schnell eine günstige Betriebsweise annehmen kann. Zweckmäßig kann es dabei sein, eine Veränderung der Förderleistung des Extruders erst dann vorzunehmen, wenn sie über einen bestimmten Zeitraum eine zulässige Abweichung überschreitet. Jedoch soll bei kleinen Abweichungen oder kurzfristigen Schwankungen der Förderleistung des Extruders, die auch eine Abweichung des ausgestoßenen Brutto-Volumens vom Sollwert bewirken würden, durch die Steuer- und Regeleinrichtung gemäß der Erfindung ggf. ein Eingriff auf andere Betriebsgrößen möglich sein, so daß trotzdem das erforderliche Brutto-Volumen mit größtmöglicher Genauigkeit ausgestoßen wird.

Dabei kann es sich in vorteilhafter Weise darum handeln, bei kleinen Abweichungen oder kurzfristigen Schwankungen in der Förderleistung des Extruders oder bei Abweichungen, die erst kurz vor dem Beginn der Ausstoßphase festgestellt werden, so daß die Auswirkungen einer Änderung der Förderleistung des Extruders nicht mehr kontrolliert werden können, durch einen Eingriff das Ausmaß des Entleerungshubes des Ringkolbens und/oder dessen Geschwindigkeit während des Ausstoßens so zu ändern, daß das erforderliche Brutto-Volumen erzeugt wird. Da diese Betriebsgrößen in der Regel kurzfristig neu eingestellt werden können, ist es gemäß der Erfindung besonders zweckmäßig, den zurückgelegten Weg und die Geschwindigkeit des Ringkolbens zumindest am Ende der Füllphase oder kurz davor zu erfassen, da davon auszugehen ist, daß die Abweichungen der Förderleistung des Extruders während der Ausstoßphase erhalten bleiben und somit mit diesen erfaßten Werten Aussagen über den weiteren Verlauf des Extrusionsprozesses gemacht werden können, anhand welcher die anderen Betriebsgrößen zur Erzielung eines möglichst genauen Brutto-Volumens verändert werden können.

So ist es z. B. möglich, bei zu geringer Förderleistung des Extruders aus dem Speicherraum eine entsprechend größere Materialmenge, bei zu hoher Förderleistung des Extruders dagegen aus dem Speicherraum eine entsprechend kleinere Materialmenge auszustoßen. Dies ist jedenfalls dann durchführbar, wenn, wie bereits erwähnt, der Speicherraum ein maximales Volumen aufweist, welches größer ist als das zu speichernde Soll-Volumen für einen Vorformling, wobei dann auch die Soll-Hublänge des Ringkolbens kleiner ist als der maximal mögliche Kolbenweg. Diese Ausgestaltung gibt die Möglichkeit, bei zu hoher Förderleistung des Extruders das Ausmaß des Kolbenhubs gegenüber dem Soll-Wert zu verkürzen, so daß auch ein geringerer Materialanteil als der zu speichernde Soll-Anteil aus dem Speicherraum durch den Ringkolben ausgestoßen wird. Dabei ergibt dieser geringere Materialanteil zusammen mit dem aufgrund der höheren Förderleistung nunmehr größeren Materialanteil, der während der Ausstoßphase von dem Extruder in den Extrusionskopf gefördert wird, die erforderliche Materialmenge für einen Vorformling. Dies hat zur Folge, daß ein Teil des gespeicherten Materialanteils zumindest während der darauffolgenden Füllphase noch im Speicherraum verbleibt.

Umgekehrt gilt, daß bei zu niedriger Förderleistung des Extruders aus dem Materialvorrat im Speicherraum des Extrusionskopfes durch entsprechende Vergrößerung des Ausmaßes des Entleerungshubes des Ringkolbens zusätzlich Material zur Bildung des Vorformlings ausgestoßen wird. Dieses zusätzliche Material ist so bemessen, daß das insgesamt aus dem Speicherraum ausgestoßene Material zusammen mit der aufgrund der zu niedrigen Förderleistung nunmehr verringerten Materialmenge, die während der Ausstoßphase von dem Extruder plastifiziert wird, die erforderliche Materialmenge für einen Vorformling ergibt.

Wichtig ist dabei, daß bei Abweichungen der Förderleistung des Extruders von dessen Soll-Förderleistung nicht nur die Lage des Soll-Hubes des Ringkolbens innerhalb des größer bemessenen Speicherraums verschoben wird und der Ringkolben nur diesen Soll-Hub durchführt, sondern daß auch die Länge des Hubes verändert wird, um die Abweichungen der Förderleistung des Extruders während der Ausstoßphase auszugleichen.

Die Verlängerung oder Verkürzung des Kolbenhubs hat bei unveränderter Geschwindigkeit des Kolbens während des Ausstoßes eine Veränderung der Ausstoßzeit zur Folge. Jedoch kann durch eine entsprechende Veränderung der Ausstoßgeschwindigkeit erreicht werden, daß die Soll-Ausstoßzeit möglichst genau eingehalten wird. Durch einen derartigen Eingriff auf die Länge des Hubes einerseits und die Geschwindigkeit des Ringkolbens während des Ausstoßens andererseits können sowohl das erforderliche Brutto-Volumen für einen Vorformling als auch die Zykluszeit eingehalten werden. Weiterhin wird, da innerhalb der vorgesehen Soll-Ausstoßzeit das Soll-Volumen für den Vorformling aus der Austrittsöffnung austritt, die für den thermoplastischen Kunststoff günstige Austrittsgeschwindigkeit eingehalten.

Wenn unter den genannten Voraussetzungen die Geschwindigkeit des Ringkolbens, mit welcher der Entleerungshub durchgeführt wird, keine Änderung erfährt und somit die für die Durchführung eines kürzeren oder längeren Hubes benötigte Zeit gegenüber der Soll-Zeit kürzer bzw. länger wird, muß dies bei erfaßter Förderleistung des Extruders auch zu einer entsprechenden, zusätzlichen Änderung des Entleerungshubes führen, damit die vom Extruder in dieser Zeitdifferenz plastifizierte Materialmenge, die demnach größer oder kleiner als die plastifizierte Materialmenge bei Soll-Bedingungen ist, ebenfalls ausgeglichen wird. Bei dieser Verfahrensweise tritt zwar eine Änderung der Zykluszeit des Extrusionssystems auf, die jedoch aufgrund des geringen Anteils des während der Entleerungsphase vom Extruder hinzugeförderten Materials so gering ist, daß sie normalerweise in Kauf genommen werden kann.

Bei einer diskontinuierlich arbeitenden Extrusionseinheit, die zur Beeinflussung der Wandstärke des Vorformlings eine Wanddickensteuerung aufweist, wird im allgemeinen der zurückgelegte Weg des Ringkolbens während des Ausstoßens als Steuersignal für die Einstellung des die Wandstärke beeinflussenden Mittels genommen. Häufig wird dabei so vorgegangen, daß der eingestellte Hub in eine Vielzahl von gleich großen Streckenabschnitten unterteilt wird, so daß jeder Streckenabschnitt einem bestimmten, aus dem Extrusionskopf austretenden Volumenanteil entspricht. Bei konstanter Ausstoßgeschwindigkeit des Ringkolbens setzt sich dieser Volumenanteil aus dem dem Streckenabschnitt entsprechenden gespeicherten Volumen und dem entsprechenden Bruchteil des während der Ausstoßzeit von dem Extruder plastifizierten Materialvolumens zusammen.

Damit jeder Streckenabschnitt des jeweiligen Kolbenhubes wieder einem gleich großen Volumenabschnitt entspricht, ist es erforderlich, die durch die Eingriffe gemäß der Erfindung veränderte Länge des Hubes jeweils dem Wanddickenprogramm zugrunde zu legen und diese in die gleiche Anzahl von Streckenabschnitten zu unterteilen. Dadurch wird gewährleistet, daß jedem Programmpunkt der Wanddickensteuerung wieder ein gleich großes ausgetretenes Volumen zugeordnet ist, so daß keine Verzerrung der Wanddickenverteilung auftritt.

Entsprechendes gilt, wenn die Wanddickensteuerung in Abhängigkeit von der Ausstoßzeit abläuft. In diesem Fall müßte die jeweils geänderte Zeit der Ausstoßphase dem Wanddickenprogramm zugrunde gelegt werden. Diese zeitabhängige Steuerung der Wanddicke ist jedoch bei diskontinuierlicher Vorformlingsherstellung nicht üblich.

Aufgrund des Vorhandenseins einer zentralen Steuer- und Regel-einheit, die mit einem geeigneten Rechner versehen ist, kann der gesamte Betriebsablauf des Extrusionssystems überwacht werden, wobei der Rechner aus den erfaßten Betriebsdaten jeweils die Änderungen errechnet, die sich aus den jeweiligen Abweichungen vom Soll-Zustand ergeben und erforderlich sind, um das gewünschte Betriebsergebnis zu erhalten. Insbesondere wird dies durch die Überwachung des Betriebszustandes des Extruders während der Füllphase erreicht, wodurch Abweichungen rechtzeitig erkannt und entsprechende Maßnahmen eingeleitet werden können. Die Änderungen können dazu dienen, die jeweilige Abweichung vom Betriebszustand, z.B. bei der Förderleistung des Extruders, möglichst schnell und möglichst weitgehend zu beseitigen. Es kann aber auch so verfahren werden, daß die Abweichung durch Änderung einer anderen Betriebsgröße, beispielsweise durch Änderung der Länge des Hubes des dem Speicherraum zugeordneten Ringkolbens und/oder dessen Geschwindigkeit während der Ausstoßphase, kompensiert wird.

Auf welche Art und Weise bestimmte Eingriffe gemäß der Erfindung erfolgen können, wird im folgenden anhand der Zeichnung, insbesondere anhand der Volumen-Zeit-Diagramme (V-t-Diagramme) eines Arbeitszyklus' einer diskontinuierlich arbeitenden Extrusionseinheit, erläutert. Es zeigen:

Fig. 1    im Schema ein Ausführungsbeispiel einer Vorrichtung zum Durchführen des Verfahrens,

Fig. 2    ein V-t-Diagramm eines idealen Arbeitszyklus',

Fig. 3    ein V-t-Diagramm mit einer Abweichung vom idealen Arbeitszyklus,

Fig. 4    ein V-t-Diagramm mit einer anderen Abweichung vom idealen Arbeitszyklus,

Fig. 5-8    jeweils ein V-t-Diagramm, bei welchen die Auswirkungen unterschiedlicher Eingriffsmöglichkeiten gemäß der Erfindung dargestellt sind,

Fig. 8A    einen vergrößerten Ausschnitt der Fig. 8 und

Fig. 9-10    jeweils ein V-t Diagramm, bei welchen die Auswirkungen weiterer Eingriffsmöglichkeiten der Erfindung dargestellt sind.

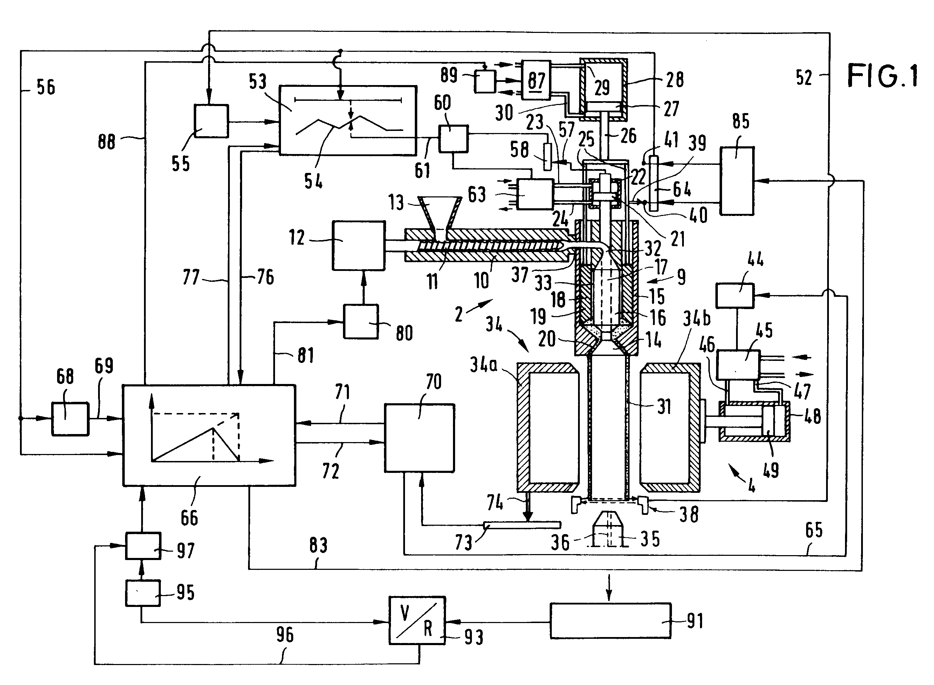

Die in Fig. 1 der Zeichnung im Schema dargestellte Vorrichtung zum Herstellen von Hohlkörpern aus thermoplastischem Kunststoff mittels Extrusionsblasformen weist eine Extrusionseinheit 2 und eine Blasformeinheit 4 auf. Der Extrusionskopf 9 der Extrusionseinheit 2 besteht im wesentlichen aus einem Gehäuse 15, einem stationären Dorn 16, einem darin koaxial verschiebbar angeordneten Kern 17 und einem in einem Speicherraum 18 axial beweglichen ringförmig ausgebildeten Kolben 19. Der Kern 17 stellt an seinem unteren Ende 14 die innere Begrenzung einer ringspaltförmigen Austrittsöffnung 20 dar. Im oberen Endbereich ist der Kern 17 mit einem Kolben 21 versehen, der innerhalb eines Zylinders 22 geführt ist. Die Zu- und Ableitungen für das im allgemeinen hydraulische Arbeitsmedium sind mit 23 und 24 bezeichnet. Der Kolben 19 ist mittels über seinen Umfang verteilt angeordneten Stangen 25 oder dgl. mit der Kolbenstange 26 eines Kolbens 27 verbunden, der in einem Zylinder 28 verschiebbar angeordnet ist. Zu- und Ableitungen 29 und 30 sind für das normalerweise hydraulische Arbeitsmedium vorgesehen.

Dem Extrusionskopf 9 ist ein Extruder 10 vorgeschaltet, dessen Schnecke 11 durch einen Motor 12 angetrieben wird. Das im allgemeinen granulatförmige thermoplastische Material wird dem Extruder 10 über einen Trichter 13 zugeführt. Der Extruder 10 mündet in eine Eintrittsöffnung 37 des Gehäuses 15 des Extrusionskopfes 9. Das plastifizierte Material wird dabei durch zwei einander gegenüberliegende, sich nach unten erweiterende Kanäle 32 in eine ringförmige Querschnittsform gebracht und strömt über einen Zwischenkanal 33, der durch den Dorn 16 und den beweglichen Ringkolben 19 gebildet wird, in den Speicherraum 18.

Unterhalb des Extrusionskopfes 9 ist die Blasformeinheit 4 angeordnet, die eine aus zwei Formhälften 34a, 34b bestehende Blasform 34 aufweist. Der Blasform 34 ist ein Dorn 35 zugeordnet, der zur Zufuhr eines Druckmittels, z. B. Druckluft, dient, durch welches der Vorformling 31 entsprechend der durch das Formnest der geschlossenen Blasform 34 gebildeten Kontur aufgeweitet wird. Die Zufuhr des Druckmittels erfolgt über eine Bohrung 36 im Dorn 35. Für die Bewegung der Blasformhälfte ist der Blasformhälfte 34b ein Antriebskolben 49, der in einem Zylinder 48 verschiebbar ist, zugeordnet. Durch bekannte Synchronisationsmittel wird bewirkt, daß sich die Blasformhälften 34a, 34b gleichmäßig in Richtung auf den Vorformling 31 bewegen können. Diese Synchronisationsmittel sind aus Gründen der Übersichtlichkeit nicht dargestellt, zumal sie jedem Fachmann geläufig sind. Es ist auch üblich, jeder Blasformhälfte 34a, 34b ein eigenes Antriebsmittel 48, 49 zuzuordnen.

Zur Durchführung des Verfahrens gemäß der Erfindung ist eine Steuer- und Regeleinrichtung vorgesehen, deren zentrale Recheneinheit mit 66 bezeichnete ist. In dieser Einheit, die z. B. ein Mikrocomputer sein kann, werden die erfaßten Betriebszustände ausgewertet und eventuelle Anpassungen der Betriebsgrößen der Extrusions- und Blasformeinheit vorgegeben.

Zur Erfassung des zurückgelegten Weges des Ringkolbens 19 ist ein Positionsgeber 64 mit einem Positionsanzeiger 39, welcher z. B. als Potentiometer ausgebildet sein kann, vorgesehen. Über die Leitung 56 steht der Positionsgeber 64 mit der zentralen Steuer- und Regeleinrichtung 66 in Verbindung, in welcher die Ist-Position mit der Soll-Position des Ringkolbens 19 verglichen und ausgewertet wird. In der Umrechnungseinheit 68 wird aus dem Positionssignal 56 die momentane Geschwindigkeit des Ringkolbens 19 ermittelt die über die Leitung 69 der zentralen Einheit 66 eingegeben wird, in welcher die Ist-Geschwindigkeit mit der vorgegebenen Soll-Geschwindigkeit sowohl während der Füllphase als auch während der Ausstoßphase verglichen wird. Entsprechend der einleitenden Erläuterung stellen diese Betriebsgrößen die wesentlichen Kontrollgrößen des Extrusionsprozesses dar, da durch sie der Zeitablauf des Prozesses erfaßt werden kann. Die Geschwindigkeit des Ringkolbens 19 während der Füllphase wird dabei als Maß für die Förderleistung des Extruders 10 genommen, dessen Antriebsmotor 12 mit einer Regelvorrichtung 80 verbunden ist, die ihrerseits über die Leitung 81 mit der zentralen Einheit 66 verbunden ist.

Zur Beeinflussung der Wanddicke des Vorformlings weist die Extrusionseinheit 2 einen beweglichen Düsenkern 17 auf, dessen Bewegungen während des Ausstoßvorgangs durch einen Programmierer 53 geregelt werden. Entsprechend dem durch die Kurve 54 repräsentierten Programm wird in Abhängigkeit vom zurückgelegten Hub des Ringkolbens 19 der Kern 17 bewegt. Dazu ist ein Ventil 63 vorgesehen, das mit den Zu- und Ableitungen 23, 24 der Kolben-Zylindereinheit 21, 22 zusammenwirkt. Der Regler 60 vergleicht die über Positionsanzeiger 57 und Positionsgeber 58 ermittelte tatsächliche Lage des Kerns 17 mit dessen Soll-Lage, welche durch das Wanddickenprogramm über die Leitung 61 vorgegeben ist. Der zurückgelegte Hub wird über die Leitung 56 vom Positionsgeber 64 dem Wanddickenprogrammierer 53 eingegeben.

Zur Kontrolle der vorgegebenen Endlänge des Vorformlings 31 kann beispielsweise wenigstens eine Lichtschranke 38 vorgesehen sein, um z. B. feststellen zu können, ob der Vorformling eine Längung oder Kürzung aufgrund der dem Kunststoff innewohnenden Eigenschaften erfahren hat. Die wenigstens eine Lichtschranke ist über eine Leitung 52 mit einer Regeleinrichtung 55 mit dem Wanddickenprogrammierer 54 verbunden ist, wodurch z. B. eine Verstellung des Wanddickenprogramms zur Beeinflussung der ausgestoßenen Länge des Vorformlings 31 bewirkt werden kann, ohne daß das Brutto-Volumen des Vorformlings 31 verändert wird. Der Wanddickenprogrammierer 54 und die zentrale Steuer- und Regeleinheit sind durch die Leitungen 76 und 77 miteinander verbunden, so daß bei eventuellen gegenseitigen Beeinflussungen, z. B. durch Veränderung des durchzuführenden Hubes des Ringkolbens 19, die Programmabläufe aneinander angeglichen werden können.

Während des Ausstoßvorganges wird die Soll-Ausstoßgeschwindigkeit des Ringkolbens 19 über ein Ventil 87, welches mit der Kolben-Zylindereinheit 27, 28 des Antriebsmittels des Ringkolbens 19 zusammenwirkt, eingestellt. Dazu ist das Ventil 87 mit einer Steuereinheit 89 verbunden, die ihr Eingangssignal über die Leitung 88 von der zentralen Einheit 66 erhält. Die Geschwindigkeit des Ringkolbens 19 wird dabei durch den Positionsgeber 64 erfaßt und über die Umrechnungseinheit 68 der zentralen Steuereinheit 66 eingegeben. Es kann aber auch ein separater Geschwindigkeitsmesser vorgesehen sein.

Die Länge des durchzuführenden Hubes des Ringkolbens 19, durch welchen das auszustoßende Volumen des innerhalb des Speicherraumes 18 gespeicherten Materials bestimmt wird, kann durch die Einstellvorrichtung 85 festgelegt werden, die in Abhängigkeit von einem über die Leitung 83 von der zentralen Steuer- und Recheneinheit 66 abgegebenen Signal den Hubweg des Ringkolbens 19 und die sich daraus ergebenden Endpositionen 40 und 41 der Hubbewegung einstellt.

Der Bewegungsablauf der Blasformeinheit 4 wird durch eine Steuereinheit 70 kontrolliert und eingestellt, durch welche die Zykluszeit, die Kühlzeit und andere notwendige Zeiten der Blasformeinheit vorgegeben werden. Die Signale für die Steuerung der Bewegung werden dabei über eine Leitung 65 der Steuereinrichtung 44 zugeführt, die mit einem Ventil 45 für die Zu- und Ableitungen 46, 47 der zugeordneten Kolben-Zylindereinheit 49, 48 verbunden ist. Die jeweilige Stellung der Blasform wird über einen Positionsgeber 73, der als Potentiometer ausgebildet sein kann, der Steuereinheit 70 eingegeben.

Die Steuereinheit 70 wirkt über die Leitungen 71 und 72 mit der zentralen Regel- und Steuereinheit 66 für den Extrusionsprozeß zusammen. Insbesondere werden durch die Steuereinheit 70 über die Leitung 71 der zentralen Steuer- und Regeleinheit 66 die einzuhaltende Zykluszeit sowie der Zeitpunkt, zu welchem die Blasform 34 zur Aufnahme eines Vorformlings bereit ist, vorgegeben.

Zur Gewichtskontrolle des ausgestoßenen Vorformlings ist eine Waage 91 vorgesehen, mit welcher der aufgeweitete Hohlkörper mit den Abfallstücken gewogen werden kann. Die Waage 91 steht in Verbindung mit einer Vergleichseinrichtung 93, in welcher das Ist-Gewicht mit dem durch die Vorgabeeinheit 95 vorgegebenen Soll-Gewicht verglichen wird. Diese Gewichtskontrolle kann z.B. bei jedem hergestellten Vorformling erfolgen, wobei es jedoch auch ausreichend sein kann, lediglich das Gewicht eines Vorformligs von mehreren Vorformlingen, die in aufeinanderfolgenden Arbeitszyklen hergestellt worden sind, zu messen. Der Sollwert des Gewichtes wird in einer Umrecheneinheit 97 in ein Brutto-Volumen ungerechnet der zentralen Steuer- und Regeleinrichtung 66 eingegeben. Über eine Leitung 96 steht die Vergleichseinrichtung 93 mit der Umrecheneinheit 97 in Verbindung, so daß bei Abweichungen des Gewichts des Vorformlings die Umrechnung korrigiert werden kann. Die Umrechnung berücksichtigt die Dichte des jeweiligen Kunststoffmaterials, ohne daß der die Dichte kennzeichnende Wert als absolute Größe bekannt sein muß.

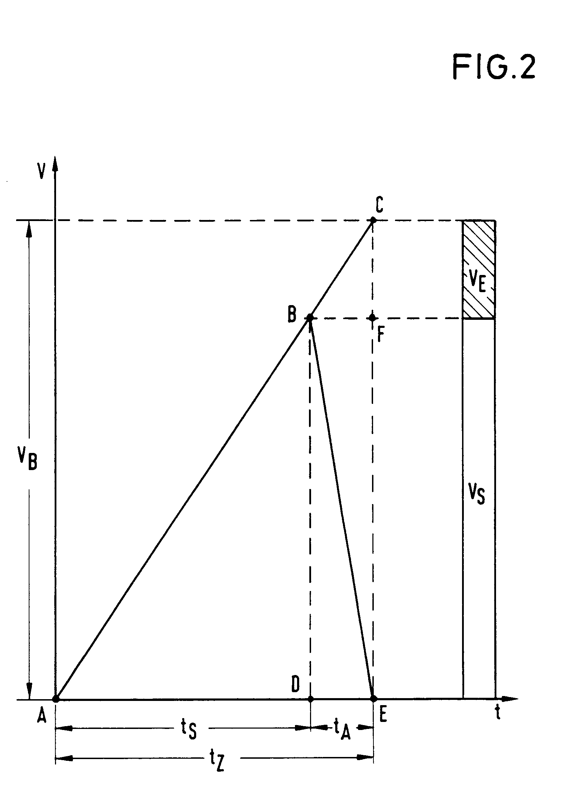

In Fig. 2 ist der ideale Verlauf eines Arbeitszyklus' einer Extrusionseinheit einleitend beschriebener Art dargestellt. Die mit V bezeichnete Ordinate stellt das plastifizierte Volumen des Kunststoffes dar. Auf der mit t bezeichneten Abszisse sind die verschiedenen Zeitabschnitte des Arbeitsablaufes eines Extrusionsprozesses eingetragen. Durch die feststehende Geometrie des Speicherraums und des Ringkolbens innerhalb des Extrusionskopfes kann einem Volumen direkt ein zurückgelegter Hub des Ringkolbens zugeordnet werden, so daß bei entsprechender Maßstabswahl auch der Hub des Ringkolbens auf der Ordinate abgelesen werden kann. Demnach entspricht der Kurvenverlauf dem Bewegungsablauf des Ringkolbens, der als maßgebende Kontrollgröße für den gesamten Arbeitszyklus herangezogen wird. Der Vorteil einer Darstellung der Volumen kann darin gesehen werden, daß außer der Bewegung des Kolbens auch das Volumen des während der Ausstoßphase extrudierten Materials sowie die Förderleistung des Extruders gezeigt werden.

Die Randbedingungen für den Extrusionsprozeß sind durch das erforderliche Brutto-Volumen $V_B$ (Strecke EC) für einen Vorformling einerseits und die Zeit $t_Z$ (Strecke AE) für einen Arbeitszyklus andererseits vorgegeben.

Entsprechend der einleitenden Erläuterung läßt sich aus den Kenngrößen des Extrusionskopfes und des Kunststoffes eine günstige Austrittsgeschwindigkeit des Kunststoffmaterials aus der Austrittsöffnung während des Ausstoßvorganges bestimmen. Daraus ergibt sich mit dem insgesamt auszustoßenden Volumen $V_B$ die Ausstoßzeit $t_A$ - (Strecke DE) als weitere Vorgabegröße. Mit diesen Vorgabegrößen $V_B$, $t_Z$ und $t_A$ können alle weiteren Soll-Werte für den Extrusionsprozeß ermittelt werden.

Die Förderleistung des kontinuierlich laufenden Extruders ergibt sich aus der Steigung der Strecke AC der Fig. 2, da innerhalb der Zeit eines Arbeitszyklus' $t_Z$ das Brutto-Volumen $V_B$ für einen Vorformling von dem Extruder plastifiziert werden muß. Aus dem Verlauf der Strecke AB sind sowohl die Soll-Geschwindigkeit als auch die Soll-Position des Ringkolbens während der Speicherphase herleitbar. Somit kann während der Speicherphase die Förderleistung des Extruders kontinuierlich oder zu bestimmten Zeitpunkten kontrolliert werden, indem die Geschwindigkeit und/oder der zurückgelegte Weg des Ringkolbens erfaßt werden. In der Ausstoßphase (Strecke DE) hingegen kann die Förderleistung des Extruders nicht durch die Geschwindigkeit und/oder die Position des Ringkolbens erfaßt werden.

Aus der Zykluszeit $t_Z$ und der Ausstoßzeit $t_A$ läßt sich der Anteil des Gesamtvolumens $V_B$ errechnen, der in dem Speicherraum während der Füllphase gesammelt werden muß. Das Verhältnis des zu speichernden Volumens $V_S$ (Strecke DB) zum Brutto-Volumen $V_B$ (Strecke EC) entspricht dem Verhältnis der Speicherzeit $t_S$ (Strecke AB), die sich aus der Differenz von der Zykluszeit $t_Z$ und der Ausstoßzeit $t_A$ ergibt, zur Zykluszeit $t_Z$ (Strecke AE). Demzufolge gilt die Beziehung

$$\frac{V_S}{V_B} = \frac{t_Z - t_A}{t_Z}$$

so daß

$$V_S = V_B \cdot \frac{(t_Z - t_A)}{t_Z} \quad .$$

Die Strecke DB entspricht dabei auch dem Soll-Hub des Ringkolbens. Aus dem Verlauf der Strecke BE können die Soll-Geschwindigkeit und der zurückzulegende Weg des Ringkolbens während der Ausstoßphase hergeleitet werden.

Da im allgemeinen das erforderliche Brutto-Volumen eines Vorformlings unter anderen Bedingungen, insbesondere hinsichtlich des herrschenden Druckes, bestimmt wird, müssen wegen der Kompressibilität des Kunststoffes die im Speicherraum herrschenden Druckverhältnisse, Materialparameter und andere Einflußgrößen bei der Anwendung der obigen Beziehung der jeweiligen Volumen des verwendeten Materials berücksichtigt werden. Da diese Einflußgrößen jedoch überwiegend in einem mehr oder weniger konstanten Verhältnis zueinander stehen, kann der sich daraus ergebende Unterschied zwischen dem Brutto-Volumen einer bestimmten Masse im Extrusionskopf einerseits und dem Brutto-Volumen dieser Masse im fertigen Artikel andererseits bei den hier angestellten prinzipiellen Darstellungen unberücksichtigt bleiben.

Da dieser Unterschied jedoch in der Praxis nicht einwandfrei bestimmt werden kann, wird das Gesamtgewicht des Vorformlings als Vorgabe für das Brutto-Volumen $V_B$ genommen, indem das Gewicht mit einem bestimmten Umrechnungsfaktor in das Brutto-Volumen umgerechnet wird. Das Gewicht des insgesamt ausgestoßenen Materials kann nach einem Arbeitszyklus durch Wiegen des aufgeweiteten Hohlkörpers zusammen mit den Abfallteilen erfaßt werden, wobei bei zu hohem Gewicht das einzuhaltende Brutto-Volumen gesenkt und bei zu niedrigem Gewicht das einzuhaltende Brutto-Volumen erhöht wird, wobei vorausgesetzt ist, daß durch den Extrusionsprozeß das jeweils zugrunde liegende Brutto-Volumen hergestellt worden ist.

Aus Fig. 2 läßt sich weiterhin entnehmen, daß der in einem Arbeitszyklus hergestellte Vorformling mit dem Brutto-Volumen $V_B$ sich zusammensetzt aus dem Materialanteil $V_S$ (Strecke DB oder EF), der im Speicherraum während der Speicherzeit $t_S$ gesammelt wird, und dem Materialanteil $V_E$ - (Strecke FC), der während der Ausstoßphase von dem wenigstens einen Extruder in den Extrusionskopf gefördert wird.

Aus dem Diagramm und der einleitend erörterten Arbeitsweise derartiger Extrusionseinheiten geht hervor, daß das Brutto-Volumen, die Zykluszeit und die Ausstoßzeit Vorgabegrößen darstellen, die zur Durchführung von Korrekturmaßnahmen nicht oder nur in engen Grenzen verändert werden können. Korrekturmaßnahmen können während eines Arbeitszyklus' die Förderleistung des Extruders, die Länge des Hubes des Ringkolbens und dessen Geschwindigkeit während des Ausstoßvorganges betreffen.

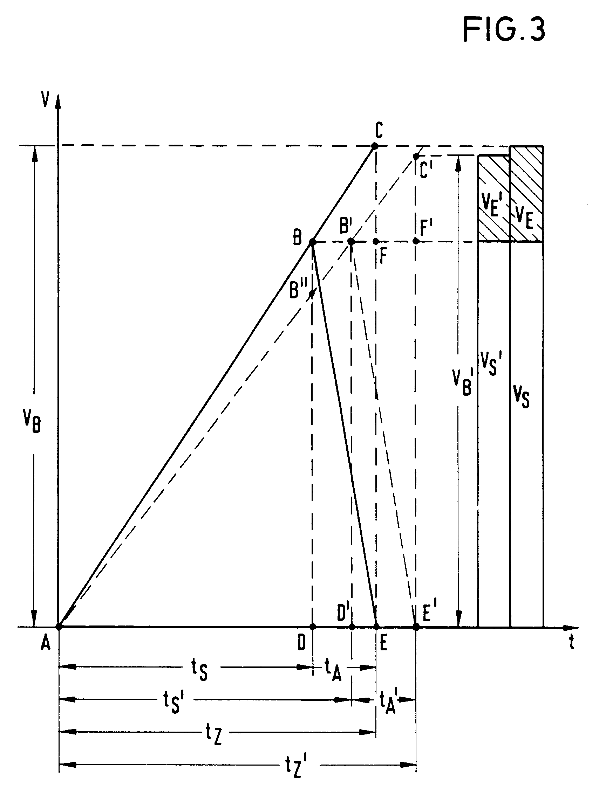

In Fig. 3 ist eine Abweichung der Förderleistung des Extruders dargestellt. Im folgenden werden vom Soll-Verlauf abweichende Betriebszustände mit ' oder " gekennzeichnet. In diesem Beispiel wird eine geringere Menge Material pro Zeiteinheit von dem Extruder plastifiziert. Dies hat zur Folge, daß das eingestellte Volumen $V_S$ des zu speichernden Materials ebenfalls zu einem späteren Zeitpunkt D' erreicht sein wird. Zu diesem späteren Zeitpunkt wird das Material mit der eingestellten Geschwindigkeit des Ringkolbens aus dem Speicherraum verdrängt, so daß die Soll-Ausstoßzeit $t_A$, allerdings zeitverschoben ($t_A'$) eingehalten wird, da der durchzuführende Hub des Ringkolbens und dessen Ausstoßgeschwindigkeit unverändert bleiben. Dies hat zur Folge, daß aufgrund der geringeren Förderleistung des Extruders während der Ausstoßphase weniger Materialvolumen $V_E'$ (Strecke F'C') in den Extrusionskopf gefördert wird und demnach das ausgestoßene Volumen $V_B'$ kleiner als das Soll-Volumen $V_B$ eines Vorformlings ist. Weiterhin wird sich dadurch eine längere Zykluszeit $t_Z'$ (Strecke AE') einstellen.

Um Mißverständnissen vorzubeugen, wird an dieser Stelle darauf hingewiesen, daß die dargestellten V-t-Diagramme nur den qualitativen Verlauf eines Extrusionsprozesses wiedergeben. Aufgrund der gewählten Achsenaufteilungen des Koordinatensystems können daher die Volumenabweichungen sehr klein und damit unbedeutend erscheinen. Es ist aber offensichtlich, daß auch bereits geringe Volumenabweichungen des ausgestoßenen Materials Längenänderungen des Vorformlings bewirken können, die z. B. eine Wanddickenverteilung bezüglich der Längserstreckung des Vorformlings erheblich verschieben können, so daß der fertige Hohlkörper nicht die gewünschte Wandstärkenverteilung aufweist. Anhand der gezeigten Beispiele sollen lediglich die prinzipiellen Verfahrensweisen erläutert werden.

Bekannte Vorrichtungen erfassen in der Regel entweder die Zeitdifferenz (Strecke DD') zwischen der Soll-Zeit und der Ist-Zeit, zu welcher das zu speichernde Material im Speicherraum gesammelt ist, oder zum Soll-Zeitpunkt D, zu welchem das gespeicherte Material ausgestoßen werden soll, die Position B" des Ringkolbens und vergleichen diese mit seiner Soll-Position B. Aufgrund des Vergleichsergebnisses wird ein Eingriff eingeleitet, der in diesem Fall eine Erhöhung der Förderleistung des Extruders bewirkt. Ein derartiger Eingriff wird sich dabei aufgrund der langsamen Reaktion des Extruders im allgemeinen erst im folgenden Arbeitszyklus auswirken können, so daß zumindest in diesem Zyklus ein Vorformling erzeugt wird, der nicht den gewünschten Anforderungen entspricht. Weiterhin ist es nachteilig, daß frühestens am Ende der Speicherphase des nächsten Zyklus' die Wirkung des Eingriffs kontrolliert werden kann.

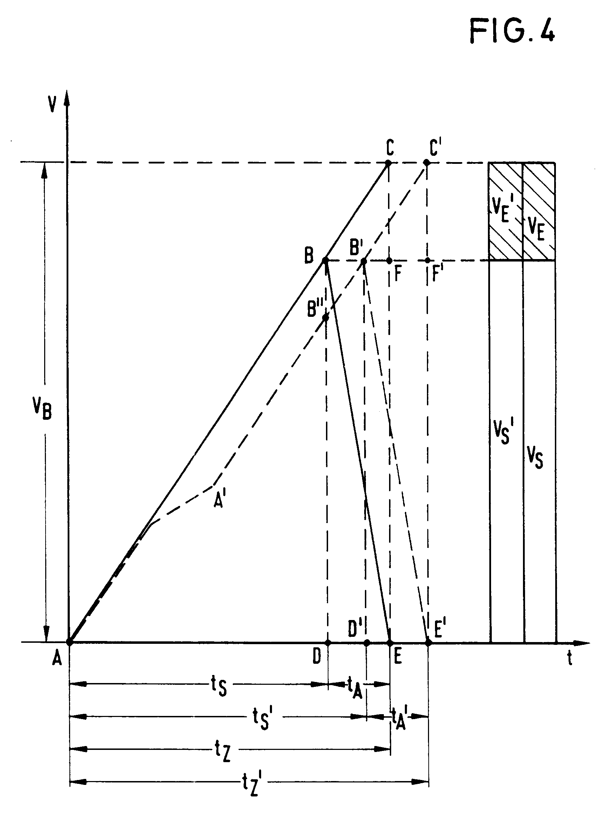

In Fig. 4 ist ein nur für kurze Zeit andauernder Förderleistungseinbruch des Extruders dargestellt, nach welchem der Extruder wieder seine Soll-Förderleistung erreicht. Eine derartige Förderleistungsänderung kann z. B. durch verzögertes Nachrutschen des granulatförmigen Kunststoffes im Einfülltrichter verursacht werden. Entsprechend der Darstellung wird das zu speichernde Volumen erst zu einem späteren Zeitpunkt D' in dem Speicherraum gespeichert sein. Da in diesem Fall bereits nach kurzer Zeit die Förderleistung des Extruders wieder dem Soll-Wert entspricht und somit die Strecke A'C' parallel zur Strecke AC verläuft, wird während der Ausstoßphase (Strecke D'E') das erforderliche Volumen $V_E$ vom Extruder in den Extrusionskopf gefördert, so daß das erforderliche BruttoVolumen, allerdings zu einem späteren Zeitpunkt (E'), ausgestoßen wird.

Aber auch in diesem Fall wird durch bekannte Regeleinrichtungen entweder die Differenz zwischen Soll-Zeit und Ist-Zeit (Strecke DD'), in welcher das zu speichernde Materialvolumen gespeichert ist, oder die Differenz zwischen Soll-Position des Ringkolbens und seiner Ist-Position (Strecke BB"), in welcher er sich nach der Soll-Speicherzeit D befindet, erfaßt. Dies hat zur Folge, daß auch in diesem Beispiel die Förderleistung des Extruders durch einen Regeleingriff verändert wird, obwohl sie nach nur kurzzeitiger Abweichung ihren Soll-Wert wieder erreicht hatte mit der Folge, daß im nächsten Arbeitszyklus vom Soll-Betriebszustand abweichende Bedingungen vorliegen, die zu einem fehlerhaften Vorformling führen.

Die Beispiele in Fig. 3 und 4 zeigen, daß Extrusionsprozesse mit bekannten Regel- und Steuereinrichtungen, welche lediglich einmal pro Zyklus den Betriebszustand erfassen, zumindest innerhalb des Arbeitszyklus', in welchem die Abweichung aufgetreten ist, einen Vorformling erzeugen, der in einer von der Soll-Zykluszeit abweichenden Zykluszeit hergestellt wird und der ggf. ein vom Soll-Wert abweichendes Brutto-Volumen aufweist. Weiterhin werden durch derartige Regel- und Steuereinrichtungen Eingriffe bewirkt, die eine Veränderung einer Betriebsgröße frühestens im nächsten Arbeitszyklus zur Folge haben, so daß deren Wirkungen demnach erst in diesem festgestellt werden können. Mithin kann es dabei vorkommen, daß Eingriffe zu dem Zeitpunkt ihrer Einleitung nicht mehr erforderlich waren. Derartig fehlgehende Eingriffe in den Extrusionsprozeß sind insbesondere darauf zurückzuführen, daß während der gesamten Speicherphase, welche in der Regel länger als die Ausstoßphase, in vielen Fällen sogar bis zu 90% der Zykluszeit andauern kann, keine der maßgebenden Betriebsgrößen, insbesondere die Förderleistung des Extruders und die Position des Ringkolbens erfaßt, ausgewertet und eventuell angepaßt werden. In der Regel werden daher mehrere Arbeitszyklen benötigt, um aufgetretene Schwankungen auszugleichen.

Mit einer Regel- und Steuereinrichtung gemäß der Erfindung sollen die Nachteile der bekannten Regeleinrichtungen dadurch vermieden werden, daß zumindest während eines Teilabschnitts der Füllphase die Geschwindigkeit des Ringkolbens als Maß für die Förderleistung und/oder dessen Position erfaßt und durch die zentrale Regel- und Steuereinheit ausgewertet werden. In Abhängigkeit von Zeitpunkt und Ausmaß eventueller Abweichungen vom Soll-Zustand werden dann Eingriffe eingeleitet, so daß mit größtmöglicher Genauigkeit das erforderliche Brutto-Volumen für einen Vorformling ausgestoßen wird. Dabei soll weiterhin angestrebt werden, daß die Zykluszeit der zugeordneten Blasformeinheit eingehalten wird. Anhand der folgenden Figuren soll die Verfahrensweise erläutert werden, wobei zum Vergleich auch der ideale Verlauf gemäß Fig. 2 gezeigt ist.

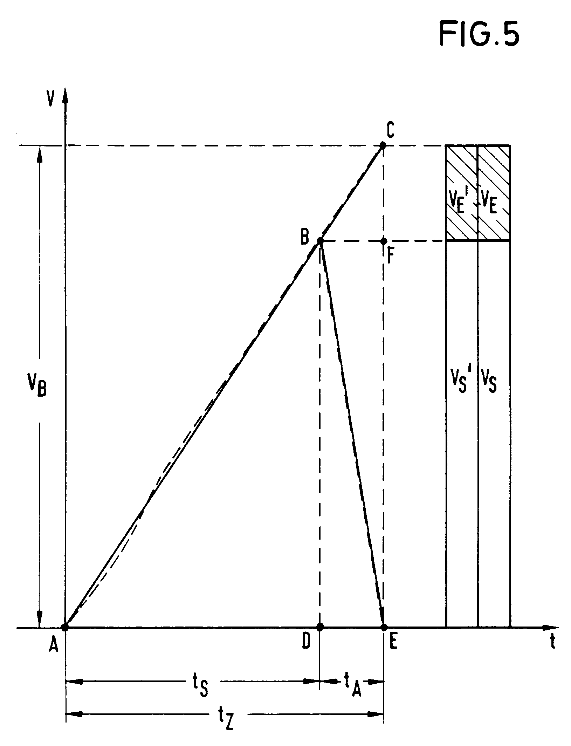

In Fig. 5 ist ein Bewegungsablauf des Ringkolbens dargestellt, der sich einstellen kann, wenn die Förderleistung des Extruders durch eine Regel- und Steuereinrichtung gemäß der Erfindung geregelt wird. Die Geschwindigkeit des Ringkolbens und dessen Positionen werden dabei mehrmals während der Füllphase erfaßt und in der Steuer- und Regeleinrichtung ausgewertet mit der Folge, daß bei eventuellen Abweichungen der dadurch erfaßten Förderleistung des Extruders diese korrigiert wird. Es ist offensichtlich, daß durch diese Erfassung der Ist-Werte und einen Vergleich mit den Soll-Werten Eingriffe bewirkt werden können, die noch in demselben Arbeitszyklus wirksam werden, und deren Wirkung in letzterem noch kontrolliert werden kann. Dies hat zur Folge, daß das Ende der Speicherphase zum richtigen Zeitpunkt D erreicht werden kann, wobei ebenfalls eine Förderleistung des Extruders eingestellt sein kann, die im wesentlichen dem Soll-Wert entspricht. Da sich eventuelle Schwankungen der Förderleistung des Extruders nunmehr nur noch in der Ausstoßphase und demnach nur noch bezüglich des während dieser Zeit extrudierten Volumens $V_E$ auswirken können, kann in der Regel das erforderliche Brutto-Volumen $V_B$ mit großer Genauigkeit ausgestoßen werden. Jedenfalls werden Schwankungen, die in der Entleerungsphase auftreten, im allgemeinen quantitativ nicht sehr ins Gewicht fallen und können in manchen Fällen in Kauf genommen werden.

Es ist bekannt, daß ein stabiler Betriebszustand eines Extruders von einer Vielzahl von Einflüssen abhängt, so daß in der Regel auch geringfügige Veränderungen durch äußere Eingriffe längerfristige Ausgleichsvorgänge zur Folge haben können. Es wird daher anzustreben sein, häufige Eingriffe auf den Betriebszustand des Extruders zu vermeiden. Demzufolge kann es in manchen Fällen unter Umständen nachteilig sein, einen Extrusionsprozeß derart zu regeln, daß sich ein Arbeitsablauf gemäß Fig. 5 ergibt.

Vielmehr wird es oft zweckmäßig sein, Eingriffe in den Betriebszustand des Extruders erst dann einzuleiten, wenn die Abweichungen der Förderleistung einen vorbestimmten Toleranzbereich überschreiten. Dies kann z. B. dann der Fall sein, wenn die Extrusionseinheit nach einer Betriebspause wieder angefahren wird, so daß sich erst noch ein stabiler Betriebszustand aller Einflußgrößen einstellen muß, die sich auf die Förderleistung des Extruders auswirken. Die bis zum Erreichen des stabilen Betriebszustandes entstehenden Abweichungen des Extrusionsprozesses können durch Veränderung anderer Betriebsgrößen ausgeglichen werden. Dies ist deshalb möglich, weil durch die Überwachung der Geschwindigkeit des Ringkolbens und dessen Position durch die zentrale Steuer- und Regeleinheit Aussagen bezüglich des Ausmaßes der Abweichung während des weiteren Verlaufs und am Ende des Extrusionsprozesses gemacht werden können, aus welchem Eingriffe auf andere Betriebsgrößen hergeleitet werden können, um das für einen Vorformling erforderliche Brutto-Volumen auszustoßen. Es wird dabei im folgenden davon ausgegangen, daß sich die in der Füllphase eingestellten Abweichungen der Förderleistung in der Ausstoßphase weiter fortsetzen. Abweichungen, die erst in der Ausstoßphase auftreten, können nicht erfaßt und demnach nicht ausgewertet werden.

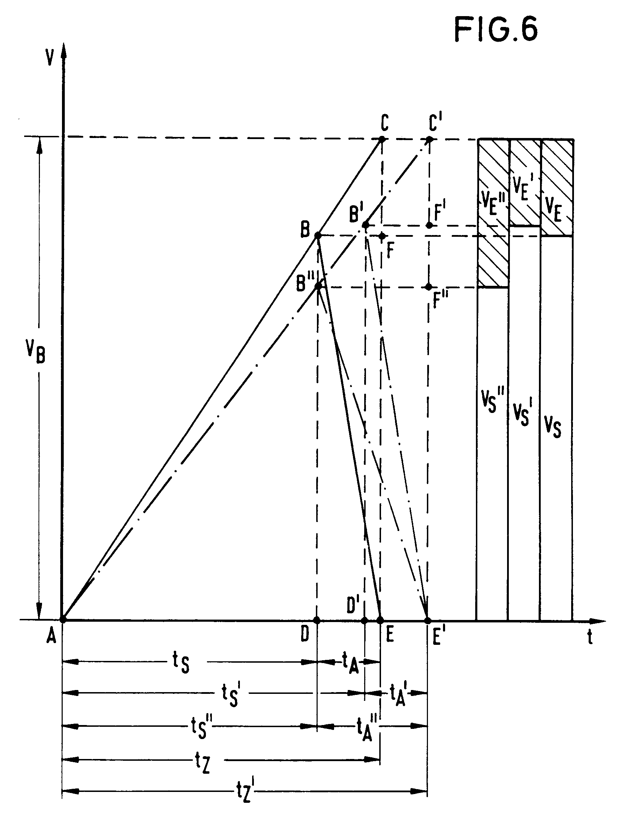

In Fig. 6 sind, ausgehend von einer Förderleistung des Extruders, die kleiner als die Soll-Förderleistung ist, Auswirkungen von Eingriffen dargestellt, die zu Veränderungen des Volumens des zu speichernden Materials und/oder der Geschwindigkeit des Ringkolbens während des Ausstoßvorganges führen, so daß im wesentlichen das erforderliche Brutto-Volumen ausgestoßen wird. Bei der ersten Möglichkeit, die in der Fig. 6 mit ' bezeichnet ist, wird das Volumen des zu speichernden Materials $V_S'$ derart vergrößert (Strecke D'B'), daß während des Ausstoßvorganges bei der eingestellten Soll-Ausstoßgeschwindigkeit des Ringkolbens das vom Extruder in den Extrusionskopf geförderte Material $V_E'$ (Strecke F'C') zusammen mit dem in diesem Arbeitszyklus gespeicherten Material $V_S'$ das erforderliche Brutto-Volumen $V_B$ ergibt. Es werden sich dabei sowohl ein anderer Zeitpunkt des Ausstoßbeginns (D') als auch eine veränderte Ausstoßzeit $t_A'$ sowie eine andere Zykluszeit $t_Z'$ einstellen. Weiterhin ist es dabei erforderlich, daß dem Ringkolben innerhalb des Speicherraums ein größerer Hub als der Soll-Hub zur Verfügung steht, damit die zum Ausgleich der abweichenden Förderleistung des Extruders vergrößerte zu speichernde Materialmenge im Speicherraum untergebracht werden kann.

Bei der mit " bezeichneten zweiten Möglichkeit wird vom Soll-Ausstoßbeginn (D) das bis zu diesem Zeitpunkt gespeicherte Material (Strecke DB") mit verringerter Ausstoßgeschwindigkeit aus dem Speicherraum verdrängt. Es wird sich demnach eine längere Ausstoßzeit $t_A''$ einstellen, innerhalb welcher entsprechend mehr Material (Strecke F''C') vom Extruder in den Extrusionskopf gefördert wird, die zusammen mit dem zuvor gespeicherten Material $V_S''$ das erforderliche Brutto-Volumen $V_B$ ergibt. Eine derartige Regelung wird dann zweckmäßig sein, wenn kein größerer Hub des Kolbens innerhalb des Speicherraumes zum Ausgleich der Förderleistung zur Verfügung steht. Weiterhin ist ein derartiger Eingriff nur dann möglich, wenn sich durch die veränderte Austrittsgeschwindigkeit des Kunststoffes aus der Austrittsöffnung während des Ausstoßvorganges keine qualitätsmindernden Beeinflussungen des Vorformling ergeben. Auch diese Regelmöglichkeit hat eine Veränderung der Zykluszeit $t_Z'$ zur Folge.

Bei beiden in Fig. 6 gezeigten Möglichkeiten werden sich von den Soll-Volumenanteilen $V_S$ und $V_E$ abweichende Volumenanteile $V_S'$ und $V_E'$ bzw. $V_S''$ und $V_E''$ einstellen, die zusammen das erforderliche Brutto-Volumen $V_B$ ergeben. Dabei führen die Ausgleichsvorgänge zu einer Veränderung der Zykluszeit und der Ausstoßzeit. Der parallel verlaufende Arbeitsablauf der Blasformmaschine muß ggf. darauf eingestellt werden. Es ist weiterhin ersichtlich, daß die gezeigte Regelmöglichkeit zu einer Zykluszeitverlängerung und damit lediglich zu einer Verringerung der Produktivität führt, wobei der dadurch hergestellte Vorformling jedoch den gewünschten Erfordernissen genügt.

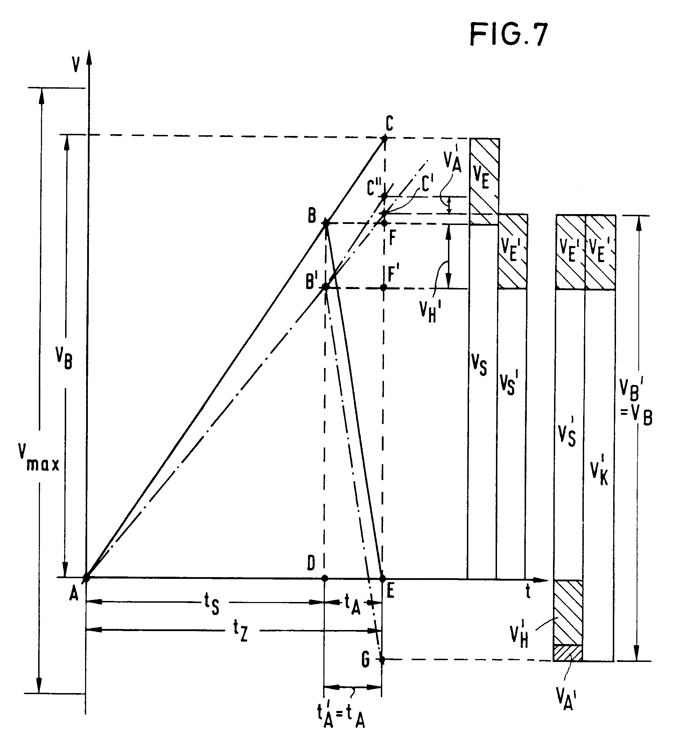

In den Fig. 7 - 10 werden daher weitere Regelmöglichkeiten dargestellt, die im Idealfall keine Veränderungen der Zykluszeit bewirken, wobei weiterhin das erforderliche Brutto-Volumen eines Vorformlings aus dem Extrusionskopf ausgestoßen wird. Gemäß den einleitend erläuterten konstruktiven Gegebenheiten ist es im allgemeinen üblich, daß der durchzuführende Hub des Ringkolbens, durch welchen das Volumen des zu speichernden Materials bestimmt wird, kleiner ist als der durch den Speicherraum vorgegebene maximal mögliche Hub, so daß das zu speichernde Volumen nur einen Teil des maximalen Volumens des zur Verfügung stehenden Speicherraums ausfüllt. In vielen Fällen wird die Anordnung der den Hub begrenzenden Positionen im Speicherraum so getroffen sein, daß sowohl bei der Ausstoßbewegung als auch bei der Bewegung des Kolbens während der Füllphase der Ringkolben einen längeren Weg durchführen kann als der Soll-Weg und somit mehr Material aus dem Speicherraum verdrängen kann als in der vorhergehenden Speicherphase gefördert wurde, bzw. mehr Material im Speicherraum gesammelt werden kann als ausgestoßen wird. Es kann also eine Materialmenge $V_K$ vom Kolben ausgestoßen werden, die nicht mit der zuvor gespeicherten Materialmenge $V_S$ übereinstimmt. Dieses zusätzliche Volumen stellt ein Ausgleichsvolumen oder eine Reserve dar, das zum Ausgleich von Abweichungen der Förderleistung des Extruders verwendet werden kann.

In Fig. 7 ist zusätzlich auf der Ordinate noch ein maximales Volumen $V_{max}$ des zur Verfügung stehenden Speicherraums dargestellt, innerhalb dessen sich das Volumen des zu speichernden Materials befindet.

Ausgehend von einer in Fig. 7 dargestellten zu geringen Förderleistung des Extruders wird der durchzuführende Hub des Ringkolbens im anschließenden Ausstoßvorgang so eingestellt, daß sich das aus dem Speicherraum verdrängte Material aus dem Volumenanteil, welcher innerhalb der Speicherzeit in diesem Zyklus plastifiziert und in den Speicherraum gefördert wurde und dem Volumenanteil, der am Ende des jeweiligen Zyklus' zur Erzielung des erforderlichen Bruttovolumens $V_B$ fehlt, zusammensetzt. Das ausgestoßene Volumen für einen Vorformling wird demnach aus dem im Zyklus gespeicherten Material, dem während der Ausstoßphase vom Extruder geförderten Material und einem Ausgleichsvolumen, welches im Speicherraum als Reserve z. B. aus vorangegangenen Zyklen vorhanden ist, gebildet.

Die auszugleichende Materialmenge läßt sich aus dem dargestellten Kurvenverlauf ermitteln. Am Ende der Zykluszeit $t_Z$ (Zeitpunkt E) soll ein neuer Vorformling mit dem Bruttovolumen $V_B$ zur Verfügung gestellt werden. Entsprechend dem Verlauf der Förderleistung (Strecke AC'), die während der Speicherphase, insbesondere am Ende derselben erfaßt wird, ist zu erwarten, daß zum Zeitpunkt E, also wenn der gesamte Vorformling ausgestoßen ist, vom Extruder nur ein Materialvolumen plastifiziert wurde, welches der Strecke EC' entspricht. Das Materialvolumen, welches der Strecke CC' entspricht, fehlt und muß ausgeglichen werden.

Bis zum vorgegebenen Zeitpunkt D wurde innerhalb der Speicherzeit $t_S$ infolge der zu niedrigen Förderleistung des Extruders nur die Materialmenge $V_S'$ (Strecke EF') gespeichert. Wenn der Entleerungsvorgang des Speichers zum vorgegebenen Zeitpunkt D beginnt, muß das aus dem Speicherraum auszustoßende Volumen $V_K'$ gegenüber dem in diesem Zyklus angespeicherten Volumen $V_S'$ um den Fehlbetrag in der Förderung des Extruders bis zum Ende des Zyklus' erhöht werden (Strecke CC'), um das insgesamt erforderliche Bruttovolumen $V_B$ zu erhalten.

Zum Zeitpunkt D beginnt der Ringkolben seinen Ausstoßhub in einer Position, welche dem Punkt B' entspricht. Bei Durchführung des Soll-Hubes würde das Volumen $V_S$ ausgestoßen, wobei die fehlende Menge Kunststoff $V_H'$ (Strecke FF') aus einer Reserve innerhalb des Speicherraums entnommen werden muß. Während der Ausstoßphase wird vom Extruder die Materialmenge $V_E'$ (Strecke F'C') plastifiziert, die wegen der Abweichung des Extruders ebenfalls geringer als die Soll-Menge $V_E$ ist. Die Parallele zur Soll-Förderung (Strecke AC) durch den Punkt B' ergibt auf der Ordinate EC einen Schnittpunkt C'', dessen Abstand zu C' dem Volumen entspricht, das von dem Extruder infolge seiner zu niedrigen Förderleistung während der Ausstoßphase zu wenig gefördert wurde. Um das der Strecke C'C'' entsprechendem Volumen $V_A'$ muß daher das zu speichernde Soll-Volumen $V_S$ vergrößert werden, indem der Hub des Ringkolbens gegenüber dem Soll-Ausstoßhub entsprechend verlängert wird.

Auch dieser Materialanteil muß aus der Reserve des Speicherraums entnommen werden. Die Summe des fehlenden Materials, das aus dem Speicherraum bereitgestellt werden muß, entspricht den Abschnitten GE bzw. FF' zuzüglich C'C'' oder CC'. Der Hubweg des Ringkolbens endet also nicht in einer Position, die dem Punkt E entspricht, sondern zum Zeitpunkt E bei dem tiefer liegenden Punkt G.

Wegen des größeren erforderlichen Hubes des Ringkolbens ist eine Erhöhung der Kolbengeschwindigkeit notwendig, wenn in der gleichen Zeit (Ausstoßzeit $t_A$) das Bruttovolumen für einen Vorformling aus der öffnung des Kopfes austreten soll. Der Kurvenabschnitt B'G weist daher einen etwas steileren Verlauf als der Kurvenabschnitt BE des Soll-Zustandes auf. Durch die angepasste Ausstoßgeschwindigkeit des Ringkolbens wird gleichzeitig bewirkt, daß die für das Kunststoffmaterial geeignete Austrittsgeschwindigkeit eingehalten wird, da in der gleichen Zeit die gleiche Menge Kunststoff aus dem Extrusionskopf austritt.

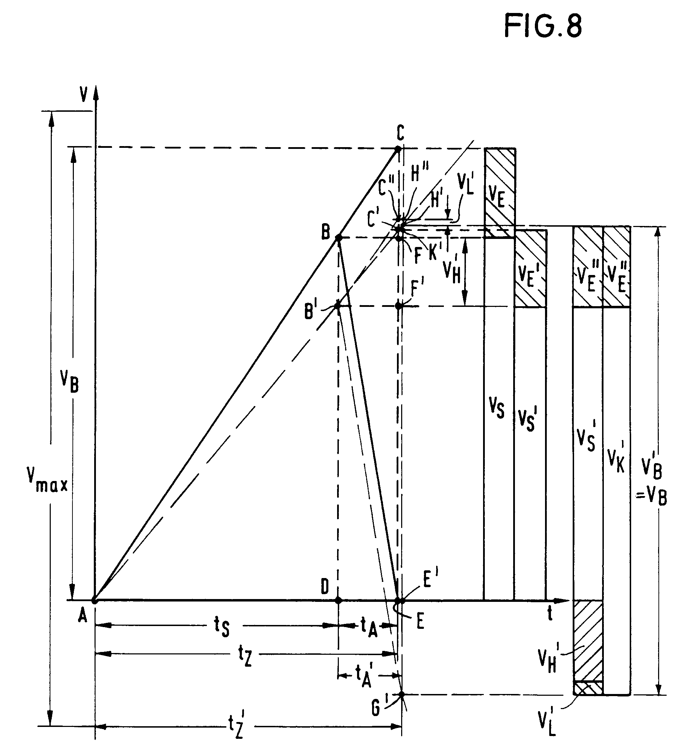

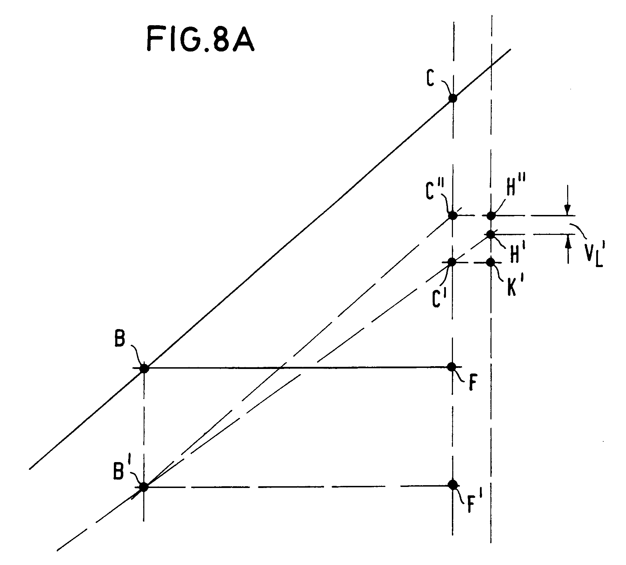

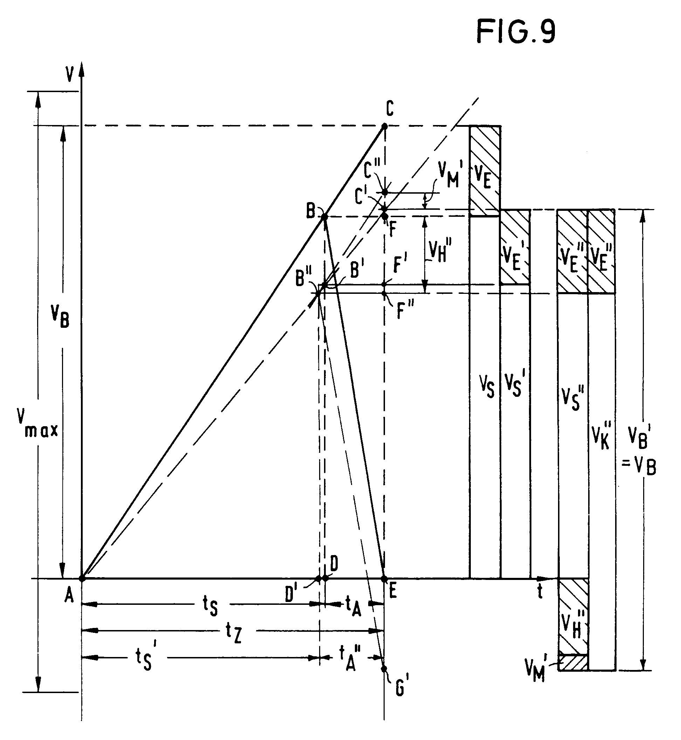

In den im folgenden beschriebenen Fig. 8 und 9 sind zum besseren Verständnis die in der Fig. 7 gezeigte Abweichung sowie jene abweichende Volumen $V_S'$ und $V_E'$, die sich aus dieser Abweichung ergeben würden, dargestellt.

In Fig. 8 ist eine Regelmöglichkeit dargestellt, bei welcher der Ringkolben seine Geschwindigkeit entsprechend dem Soll-Zustand (Steigung der Strecke BE) während der Ausstoßphase beibehält. Wegen des längeren Hubes aufgrund des um $V_L'$ (Strecke H'H'') vergrößerten, aus dem Speicherraum auszustoßenden Volumens $V_K'$ wird sich eine längere Ausstoßzeit $t_A'$ einstellen. Diese Verlängerung der Ausstoßzeit muß bei der Bemessung des längeren Hubes und somit von $V_L'$ berücksichtigt werden, da in dieser Zeit weiterhin Material (Strecke K'H') von dem Extruder plastifiziert wird und aus dem Extrusionskopf austritt. Bei gleicher Abweichung der Förderleistung wird daher das Ausgleichsvolumen $V_L'$ gemäß Fig. 8 kleiner sein als das Ausgleichsvolumen $V_A'$ gemäß Fig. 7, da in der verlängerten Ausstoßzeit ein größeres Volumen $V_E''$ in den Extrusionskopf gefördert wird. Das während der verlängerten Zykluszeit $t_Z'$ vom Extruder insgesamt plastifizierte Materialvolumen entspricht der Strecke E'H'. Aufgrund der längeren Zykluszeit und des durchzuführenden Hubes, der bei zu niedriger Förderleistung länger als der vorhergehende Hub während der Füllphase ist, endet der Ausstoßhub des Ringkolbens zum Zeitpunkt E' in der tiefer liegenden Position G'.

Bei einer Regelung gemäß Fig. 8 wird sich eine verlängerte Zykluszeit $t_Z'$ einstellen. Dies kann jedoch auch bei unveränderter Geschwindigkeit des Ringkolbens während des Ausstoßens, durch eine Regelung gemäß Fig. 9 vermieden werden. Dabei beginnt der Ausstoßvorgang schon zu einem früheren Zeitpunkt D', der zusammen mit einer Verlängerung des Hubes und somit einer Vergrößerung der auszustoßenden Materialmenge $V_K''$ so gewählt ist, daß in der dadurch längeren Ausstoßzeit $t_A''$ soviel Material $V_E''$ vom Extruder in den Extrusionskopf gefördert wird, daß das Soll-Brutto-Volumen aus dem Extrusionskopf austritt. Das insgesamt ausgestoßene Material $V_B$ setzt sich demnach zusammen aus dem in der verkürzten Speicherzeit $t_S'$ gesammelten Material $V_S''$, dem in der verlängerten Ausstoßzeit $t_A''$ von dem Extruder plastifizierten Material $V_E''$ und aus dem Ausgleichsvolumen $V_H''$, das dem zu wenig gesammelten Materialvolumen (Strecke F''F) entspricht, sowie dem Ausgleichsvolumen $V_M'$, welches dem vom Extruder in der Ausstoßphase zu wenig geförderten Material (Strecke C'C'') entspricht. Der Punkt C'' entspricht dabei dem Schnittpunkt einer Parallelen zur Soll-Förderleistung-Linie AC durch den Punkt B''

mit der Ordinate EC. Die Volumen $V_S''$ und $V_H''$ ergeben zusammen wieder das zu speichernde Soll-Volumen $V_S$, so daß der Ringkolben lediglich den, um einen dem Volumen $V_M'$ entsprechenden Weg verlängerten Soll-Hub durchfahren muß. Diese Regelmöglichkeit ist nur dann durchführbar, wenn durch den früheren Beginn des Ausstoßvorganges der Arbeitsablauf der zugeordneten Blasformmaschine nicht gestört wird.

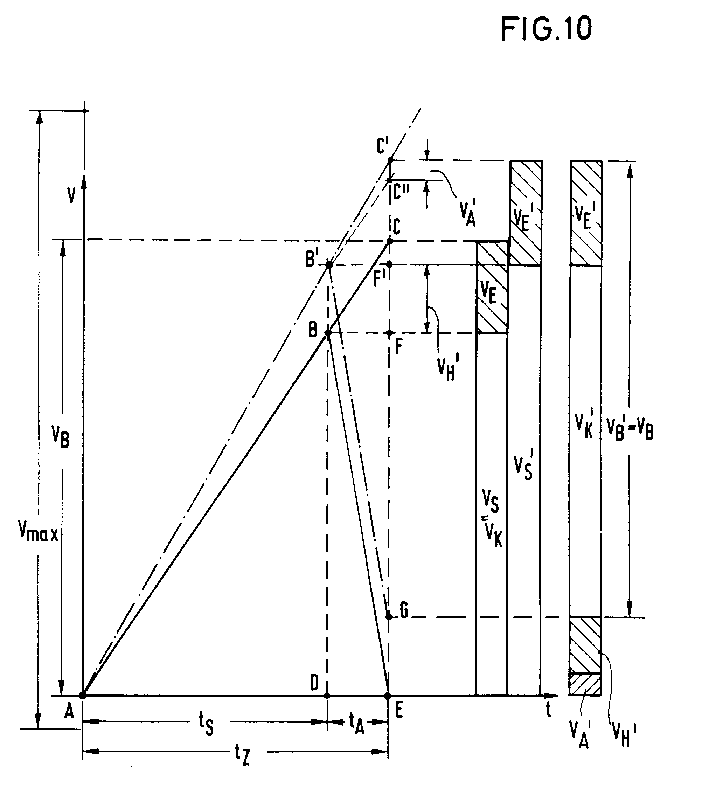

Es ist selbstverständlich, daß die gezeigten Ausgleichsvorgänge sinngemäß auch auf solche Abweichungen übertragbar sind, die durch eine zu große Förderleistung des Extruders verursacht werden. Das Beispiel in Fig. 10 zeigt eine gleichmäßig zu hohe Förderleistung des Extruders entsprechend dem Linienzug AB'C'. Am Ende des Arbeitszyklus' zum Zeitpunkt E soll wiederum das Volumen $V_B$ für einen Vorformling ausgestoßen sein. Infolge einer gegenüber der Soll-Förderleistung (Linienzug ABC) höheren Förderleistung ist am Ende der Zykluszeit vom Extruder ein Volumen (Strecke EC') gefördert worden, welches größer als das auszustoßende Brutto-Volumen $V_B$ für einen Vorformling ist.

In der Speicherphase $t_S$ wurde ein um das Volumen $V_H'$ (Strecke FF') gegenüber dem zu speichernden Soll-Volumen $V_S$ vergrößertes Volumen $V_S'$ gesammelt. Der Verlauf der Förderleistung, die während der Füllphase erfaßt wird, läßt erwarten, daß in der Ausstoßphase bis zum Zeitpunkt E ebenfalls ein Überschuß gegenüber der Soll-Förderung anfällt. Der auf die Ausstoßphase zu beziehende Überschußanteil $V_A'$ entspricht demnach dem Abstand zwischen dem Punkt C' und dem Schnittpunkt C'' einer durch den Punkt B' gehenden Parallelen zur Soll-Förderleistung-Linie AC mit der Ordinate EC'.

Wenn zum Zeitpunkt D der Ausstoßvorgang von einer Ringkolbenstellung, die dem Punkt B' entspricht, beginnt, muß die Länge des Soll-Hubes um einen dem Volumen $V_A'$ entsprechenden Weg verkürzt werden, der dem Abstand C''C' entspricht, damit das erforderliche Brutto-Volumen ausgestoßen werden kann. Die Materialmenge, die dem in der Speicherphase $t_S$ zuviel geförderten Material $V_H'$ (Strecke BB') zusammen mit dem während der Ausstoßphase $t_A$ zuviel geförderten Material $V_A'$ (Strecke C'C'') entspricht, muß vorübergehend in den Speicherraum aufgenommen werden.

Das auszustoßende Brutto-Volumen $V_B$ setzt sich demnach aus der während der Ausstoßphase $t_A$ vom Extruder gefördertem Materialmenge $V_E'$ (F'C') und der aus dem Speicherraum von dem Ringkolben ausgestoßenen Menge $V_K'$, die kleiner als das zu speichernde Soll-Volumen $V_S$ ist, zusammen.

Die Verkürzung der Länge des Ausstoßhubes hat zur Folge, daß zur Erzielung der vorgegebenen Ausstoßzeit $t_A$ die Geschwindigkeit des Kolbens reduziert werden muß. Der Kurvenabschnitts B'G verläuft daher etwas weniger steil als der Verlauf des Kurvenabschnittes BE des Soll-Zustandes. Der Ausstoßhub des Ringkolbens endet also zum Zeitpunkt E in der höher liegenden Position G.

Bei anderen Regelmöglichkeiten wird darauf zu achten sein, daß ein ggf. erforderlicher Ausgleichsvorgang eine kürzere Zykluszeit und/oder einen früheren Ausstoßbeginn zur Folge haben kann, die unter Umständen den vorgegebenen Zeitabläufen des zugeordneten Blasformprozesses nicht angepaßt werden können, da z. B. die Blasform zu einem früheren Ausstoßbeginn noch nicht zur Aufnahme eines Vorformlings bereit ist.

Theoretisch sind die Regelmöglichkeiten gemäß den Fig. 7 - 10 durch die Grenzen des maximalen Hubes des Ringkolbens Beschränkungen unterworfen, falls das Ausgleichsvolumen bei zu hoher Förderleistung des Extruders vollständig gefüllt oder bei zu niedriger Förderleistung vollständig entleert wird. Die Grenzen werden im allgemeinen dann erreicht sein, wenn der Extruder über mehrere Arbeitszyklen gleichgerichtete Abweichungen aufweist. Zu diesem Zeitpunkt muß die Förderleistung derart verändert werden, daß sich entweder der Soll-Zustand einstellt oder zumindest wieder eine Ausgleichsregelung z. B. gemäß den Fig. 7-10 möglich wird. Es kann dabei vorgesehen werden, z. B. bei zu geringer Förderleistung des Extruders bei Erreichen der vollständigen Entleerung des Speicherraums den Extruder auf einen stabilen Betriebszustand zu bringen, der eine geringfügig höhere Förderleistung zur Folge hat. Nach mehreren Zyklen wird es dann erforderlich sein, eine geringfügig kleinere Förderleistung einzustellen, da der Speicherraum nunmehr weitgehend gefüllt ist. Zweckmäßig kann es auch sein, einen vollständig entleerten Speicherraum dadurch aufzufüllen, daß durch zumindest einen Zyklus mit verlängerter Zykluszeit das Ausgleichsvolumen des Speicherraums wieder aufgefüllt wird. Umgekehrt könnte durch zumindest einen Zyklus mit verkürzter Zykluszeit das vollständig gefüllte Ausgleichsvolumen des Speicherraums zumindest teilweise wieder entleert werden. Bei den letztgenannten Möglichkeiten muß jedoch auch die Zykluszeit der zugeordneten Blasformmaschine berücksichtigt werden, damit derartige Veränderungen den Blasformprozeß nicht beeinträchtigen. Besonders zweckmäßig wird es sein, solche Ausgleichsvorgänge für das Ausgleichsvolumen des Speicherraums einzuleiten, bevor die unveränderbaren konstruktiv vorgegebenen Anschlagspositionen für den Ringkolben erreicht werden, so daß sichergestellt ist, daß in jedem Zyklus ein Vorformling mit dem erforderlichen Brutto-Volumen ausgestoßen wird. Die vorstehend erörterten Möglichkeiten werden jedoch in vielen Fällen nicht erforderlich sein, da im allgemeinen die Förderleistung des Extruders nicht ausschließlich in einer Richtung von der Soll-Förderleistung abweicht.

Vorteilhaft ist bei den in den Fig. 6 - 10 gezeigten Regelungen, daß die durchzuführenden Ausgleichsvorgänge auch dann noch zum gewünschten Erfolg führen, wenn z. B. Abweichungen der Förderleistung des Extruders, die auch den zulässigen Toleranzbereich überschreiten können, kurz vor dem Ende der Füllphase festgestellt werden, so daß die Auswirkungen eines Eingriffes auf den Betriebszustand des Extruders nicht mehr während desselben Arbeitszyklus' überwacht werden könnten. Da die in Fig. 6 - 10 gezeigten Anpassungen in erster Linie Betriebsgrößen für den anschließenden Ausstoßvorgang sind, können die Anpassungen nahezu ohne Zeitverzögerung vorgenommen werden. Insbesondere wird durch diese Regelungen ein häufiger Regeleingriff auf den Betriebszustand des Extruders vermieden, wobei trotzdem mit hoher Genauigkeit das Brutto-Volumen des Vorformlings ausgestoßen wird.

Insbesondere wird es daher zweckmäßig sein, daß der Förderzustand des Extruders, der durch die Geschwindigkeit und den Weg-Zeitverlauf des Ringkolbens während der Füllphase bestimmt ist, zumindest kurz vor oder beim Beginn der Ausstoßphase zu erfassen, um eine Aussage über die Förderleistung während der Ausstoßphase zu erhalten, so daß ggf. entsprechende Eingriffe auf die Betriebsgrößen durchgeführt werden können.

Es kann aber auch zweckmäßig sein, bei zu großen Abweichungen der Förderleistung des Extruders zunächst auf diesen Betriebszustand, z. B. gemäß der Regelmöglichkeit nach Fig. 5 einzugreifen und, falls dieser Eingriff nicht den vollen Erfolg zeigt, eine Regelung gemäß den Fig. 6 - 10 ergänzend durchzuführen.

Es ist selbstverständlich, daß eine Regelung gemäß Fig. 7 oder 10 auch auf eine Abweichung, die in Fig. 4 gezeigt ist, anwendbar ist. In einem solchen Fall müßte lediglich das fehlende Materialvolumen (Strecke B'B) aus dem Ausgleichsvolumen des Speicherraums entnommen werden, welches während der Füllphase $t_S$ zuwenig im Speicherraum gespeichert wurde, da die Förderleistung des Extruders wieder ihren Soll-Wert erreicht hat. Ein zusätzliches Volumen $V_A'$ müßte demnach nicht ausgestoßen werden. Insbesondere bei einer derartigen Störung des Betriebszustandes sind die Vorteile der erfindungsgemäßen Steuer- und Regeleinheit zu erkennen. Da im Gegensatz zu bekannten Regelungen die Förderleistung des Extruders während der Füllphase überwacht wird, erfolgt lediglich ein Ausgleich des fehlenden gespeicherten Materials, weil die zum Ende des Füllvorgangs wieder vorhandene Soll-Förderleistung erfaßt wird.

Ein in diesem Fall sonst üblicher, fehlgehender Eingriff auf den Betriebszustand des Extruders wird somit nicht durchgeführt mit der Folge, daß im anschließenden Arbeitszyklus die gewünschte Extruderleistung jedenfalls dann eingestellt bleibt, wenn keine zusätzlichen Einflüsse auftreten.

Die Beschreibung der Erfindung bezieht sich im wesentlichen auf Extrusionseinheiten, die einen Extruder aufweisen und denen eine Blasform zugeordnet ist. Selbstverständlich ist die Erfindung auch auf solche Extrusionseinheiten anwendbar, die z. B. zur Bildung mehrschichtiger Vorformlinge eine entsprechende Anzahl von Extrudern aufweisen. Sind der Extrusionseinheit zwei oder mehr Blasformeinheiten zugeordnet, kommt der Erfindung eine besondere Bedeutung zu, da der Anteil des während der Entleerungsphase in den Extrusionskopf geförderten Materialvolumens größer ist mit der Folge, daß Abweichungen der Förderleistung des Extruders größere Auswirkungen haben werden.

**Patentansprüche**

1. Verfahren zum Herstellen von Hohlkörpern aus thermoplastischem Kunststoff mittels Extrusionsblasformen, bei welchem Verfahren absatzweise Vorformlinge (31) hergestellt werden unter Verwendung einer Extrusionseinheit (2), die wenigstens einen kontinuierlich laufenden Extruder (10), einen Extrusionskopf (9), wenigstens einen Speicherraum (18) zum Speichern des in dem wenigstens einen Extruder plastifizierten Materials und wenigstens ein zwischen zwei Endpositionen hubartig hin- und herbewegbares Mittel zum Entleeren (19) des wenigstens einen Speicherraums aufweist, wobei ein Arbeitszyklus ($t_Z$) der Extrusionseinheit zwei Betriebsphasen ($t_A$, $t_S$) aufweist und in einer der Betriebsphasen ($t_S$) der wenigstens eine Speicherraum unter Verdrängung des wenigstens einen Mittels zum Entleeren des Speicherraumes zumindest teilweise gefüllt und während der anderen Betriebsphase ($t_A$) das in dem wenigstens einen Speicherraum befindliche Kunststoffmaterial mittels des durch Antriebsmittel bewegten wenigstens einen Mittels zum Entleeren des Speicherraumes in Richtung auf die Austrittsöffnung (10) des Extrusionskopfes vorbewegt und aus der Austrittsöffnung ein Volumenabschnitt des plastifizierten Materials zur Bildung des Vorformlings ausgestoßen wird, und der ausgestoßene Volumenabschnitt ($V_B$) ein Volumen aufweist, das sich aus einem Volumenanteil ($V_S$), welcher zuvor in dem wenigstens einen Speicherraum gespeichert war, und einem Volumenanteil ($V_E$) zusammensetzt, welcher während der Ausstoßzeit ($t_A$) von dem wenigstens einen Extruder in den Extrusionskopf gefördert wird und zumindest ein Teilabschnitt des Volumenabschnitts innerhalb des Formnestes einer unterteilten Blasform (34), die wenigstens zwei zueinander bewegbare Formteile (34a, 34b) aufweist, welche das Formnest begrenzen, unter innerem Überdruck aufgeweitet und gekühlt wird, dadurch gekennzeichnet, daß wenigstens einmal während des Füllvorgangs ($t_S$) der zurückgelegte Weg und/oder die Geschwindigkeit des wenigstens einen Mittels zum Entleeren (19) des wenigstens einen Speicherraums (18) zur Ermittlung der Ist-Förderleistung des wenigstens einen Extruders (10) erfaßt wird und während desselben Arbeitszyklus' in einer Steuer- und Regeleinrichtung (66) mit Soll-Werten des zurückgelegten Weges bzw. der Geschwindigkeit, die der Soll-Förderleistung des wenigstens einen Extruders (10) entspricht, verglichen werden und während desselben Arbeitszyklus' zumindest bei einer ein vorgegebenes Ausmaß überschreitenden Abweichung von wenigstens einem Soll-Wert in Abhängigkeit von dem Vergleichsergebnis wenigstens eine Betriebsgröße der Extrusionseinheit (2) und/oder der Vorgabewert wenigstens einer Betriebsgröße geändert wird, so daß das vorbestimmte Volumen ($V_B$) für den unmittelbar anschließend extrudierten Vorformling (31) mit größtmoglicher Genauigkeit aus dem Extrusionskopf (9) ausgestoßen wird.

2. Verfahren nach Anspruch 1, dadurch gekennzeichnet, daß die Soll-Förderleistung des wenigstens einen Extruders (10) aus dem vorbestimmten Volumen ($V_B$) des auszustoßenden Vorformlings (31) und der vorbestimmten Zeit eines Arbeitszyklus' ($t_Z$) in der Steuer- und Regeleinrichtung (66) ermittelt wird.

3. Verfahren nach Anspruch 2, dadurch gekennzeichnet, daß das Gewicht des ausgestoßenen Vorformlings (31) gemessen und mit einem vorgegebenen Soll-Gewicht verglichen wird, wobei in Abhängigkeit von der festgestellten Abweichung das vorbestimmte Volumen $V_B$ des auszustoßenden Vorformlings (31) zur Bestimmung der Soll-Förderleistung verändert wird.

4. Verfahren nach Anspruch 3, dadurch gekennzeichnet, daß das Gewicht wenigstens eines der Vorformlinge (31) gemessen wird, die in mehreren aufeinander folgenden Arbeitszyklen ($t_Z$) angefertigt worden sind.

5. Verfahren nach Anspruch 3 oder 4, dadurch gekennzeichnet, daß das Gewicht des aufgeweiteten Hohlkörpers mit seinen Abfallstücken gemessen wird.

6. Verfahren nach Anspruch 1, dadurch gekennzeichnet, daß zumindest zum Ende des Füllvorgangs ($t_S$) die Geschwindigkeit des wenigstens einen Mittels zum Entleeren (19) des wenigstens einen Speicherraums (18) zur Ermittlung der Ist-Förderleistung des wenigstens einen Extruders (10) erfaßt wird.

7. Verfahren nach Anspruch 1, dadurch gekennzeichnet, daß zumindest am Ende des Füllvorgangs ($t_S$) der zurückgelegte Weg und die Geschwindigkeit des wenigstens einen Mittels (19) zum Entleeren des wenigstens einen Speicherraums (18) zur Ermittlung der Ist-Förderleistung des wenigstens einen Extruders (10) erfaßt werden.

8. Verfahren nach Anspruch 1, dadurch gekennzeichnet, daß zu mehreren Zeitpunkten während des Füllvorgangs ($t_S$) der zurückgelegte Weg und/oder die Geschwindigkeit des wenigstens einen Mittels zum Entleeren (19) des wenigstens einen Speicherraums (18) zur Ermittlung der Ist-Förderleistung des wenigstens einen Extruders (10) erfaßt werden.

9. Verfahren nach Anspruch 1, dadurch gekennzeichnet, daß wenigstens während eines Teilabschnitts des Füllvorgangs ($t_S$) der zurückgelegte Weg und/oder die Geschwindigkeit des wenigstens einen Mittels zum Entleeren (19) des wenigstens einen Speicherraums (18) zur Ermittlung der Ist-Förderleistung des wenigstens einen Extruders (10) kontinuierlich erfaßt werden.

10. Verfahren nach Anspruch 1, dadurch gekennzeichnet, daß eine Veränderung der wenigstens einen Betriebsgröße in Abhängigkeit von dem Zeitpunkt des Feststellens einer Abweichung von einem Soll-Wert durchgeführt wird.

11. Verfahren nach Anspruch 1, dadurch gekennzeichnet, daß eine Veränderung der wenigstens einen Betriebsgröße noch während des Arbeitszyklus' ($t_Z$) der Extrusionseinheit (2) durchgeführt wird, in welchem die Abweichung festgestellt wird.

12. Verfahren nach Anspruch 11, dadurch gekennzeichnet, daß eine Veränderung der wenigstens einen Betriebsgröße noch in derselben Betriebsphase ($t_S$) durchgeführt wird, in welcher die Abweichung festgestellt wird.

**13.** Verfahren nach Anspruch 11, dadurch gekennzeichnet, daß eine Veränderung der wenigstens einen Betriebsgröße in der Betriebsphase ($t_A,t_S$) desselben Arbeitszyklus' ($t_Z$) durchgeführt wird, die der Betriebsphase folgt, in welcher die Abweichung festgestellt wird.

**14.** Verfahren nach Anspruch 1, dadurch gekennzeichnet, daß bei einer Abweichung der Ist-Förderleistung von der Soll-Förderleistung des wenigstens einen Extruders (10) dessen Förderleistung nur dann eine Änderung erfährt, wenn die Auswirkungen der Änderung in demselben Arbeitszyklus ($t_Z$) kontrolliert werden können.

**15.** Verfahren nach Anspruch 1, dadurch gekennzeichnet, daß bei einer Abweichung der Ist-Förderleistung von der Soll-Förderleistung des wenigstens einen Extruders (10) das Ausmaß des Hubes des wenigstens einen Mittels zum Entleeren (19) des wenigstens einen Speicherraums (18) für die anschließende Ausstoßphase verändert wird, um so die aus der Abweichung sich ergebende Mengendifferenz zumindest teilweise zu kompensieren, wobei der maximale Hub innerhalb des wenigstens einen Speicherraums (18) größer als der Soll-Hub des wenigstens einen Mittels zum Entleeren (19) ist.

**16.** Verfahren nach Anspruch 1, dadurch gekennzeichnet, daß der Soll-Hub des wenigstens einen Mittels zum Entleeren (19) dem zu speichernden Soll-Volumen ($V_S$) entspricht, wobei das Verhältnis von dem zu speichernden Soll-Volumen ($V_S$) zu dem für einen Vorformling erforderlichen Volumen ($V_B$) gleich dem Verhältnis von der Differenz zwischen der Zykluszeit ($t_Z$) und der Ausstoßzeit ($t_A$) zur Zykluszeit ($t_Z$) ist.

**17.** Verfahren nach Anspruch 1, dadurch gekennzeichnet, daß bei einer Abweichung der Ist-Förderleistung von der Soll-Förderleistung des wenigstens einen Extruders (10) die Geschwindigkeit des wenigstens einen Mittels (19) zum Entleeren des wenigstens einen Speicherraums (18) für die anschließende Ausstoßphase verändert wird derart, daß das vorbestimmte Volumen ($V_B$) für einen Vorformling (31) mit größtmöglicher Genauigkeit aus dem Extrusionskopf (9) ausgestoßen wird.

**18.** Verfahren nach Anspruch 1, dadurch gekennzeichnet, daß die Ausstoßgeschwindigkeit des wenigstens einen Mittels zum Entleeren (19) aus dem durchzuführenden Hub während der Ausstoßzeit in der Steuer- und Regeleinrichtung (66) ermittelt wird.

**19.** Verfahren nach Anspruch 1, dadurch gekennzeichnet, daß bei einer Abweichung der Ist-Förderleistung von der Soll-Förderleistung des wenigstens einen Extruders (10) das Ausmaß des Hubes und die Geschwindigkeit des wenigstens einen Mittels zum Entleeren (19) des wenigstens einen Speicherraums (18) für die anschließende Ausstoßphase ($t_A$) verändert werden derart, daß einerseits das vorbestimmte Volumen ($V_B$) für einen Vorformling mit größtmöglicher Genauigkeit aus dem Extrusionskopf (9) ausgestoßen wird und andererseits die Soll-Ausstoßzeit ($t_A$) mit größtmöglicher Genauigkeit eingehalten wird.

**20.** Verfahren nach Anspruch 15, dadurch gekennzeichnet, daß die Änderung der Länge des Hubes des wenigstens einen Mittels zum Entleeren (19) des wenigstens einen Speicherraums (18) der Menge des thermoplastischen Materials entspricht, die gleich der Differenz zwischen der Soll-Fördermenge ($V_E$) und der Ist-Fördermenge ($V_E'$, $V_E''$) des wenigstens einen Extruders (10) während der Soll-Ausstoßzeit ($t_A$) ist.

**21.** Verfahren nach Anspruch 20, dadurch gekennzeichnet, daß die Materialmenge, die aufgrund der Änderung der Ausstoßzeit, die durch die Änderung der Länge des Hubes bei gegenüber dem Soll-Zustand unveränderter Ausstoßgeschwindigkeit des wenigstens einen Mittels zum Entleeren (19) bewirkt wird, zuviel oder zuwenig von dem wenigstens einen Extruder (10) in den Extrusionskopf (9) gefördert wird, bei der Änderung der Länge des Hubes berücksichtigt wird.

**22.** Verfahren nach Anspruch 17, dadurch gekennzeichnet, daß die Geschwindigkeit während der Ausstoßphase des wenigstens einen Mittels zum Entleeren (19) so verändert wird, daß in der dadurch veränderten Ausstoßzeit ($t_A'$, $t_A''$) eine Menge thermoplastischen Materials ($V_E'$, $V_E''$) von dem wenigstens einen Extruder (10) in den Extrusionskopf (9) gefördert wird, die der Differenz zwischen dem erforderlichen auszustoßenden Volumen ($V_B$) eines Vorformlings (31) und der vorher gespeicherten Menge ($V_S'$, $V_S''$) des thermoplastischen Kunststoffes entspricht.

**23.** Verfahren nach Anspruch 19, dadurch gekennzeichnet, daß die mittels der veränderten Länge des Hubes des wenigstens einen Mittels zum Entleeren (19) einzustellende Mengendifferenz ($V_A'$) zwischen der durch dieses Mittel ausgestoßenen Menge ($V_K'$) und der zu speichernden Soll-Menge ($V_S$) der Menge des thermoplastischen Kunststoffes entspricht, die aufgrund der veränderten Förderleistung des wenigstens einen Extruders (6) während der Ausstoßzeit, die durch die veränderte Geschwindigkeit des wenigstens einen Mittels zum Entleeren (19) zumindest näherungsweise der Soll-Ausstoßzeit ($t_A$) entspricht, zu viel oder zu wenig in den Extrusionskopf (9) gefördert würde.

**Claims**

1. A process for the production of hollow bodies from thermoplastic material by extrusion blow molding, in which process preforms (31) are produced in a batch-wise manner using an extrusion unit (2) which has at least one continuously operating extruder (10), an extrusion head (9), at least one storage chamber (18) for storage of the material plasticised in the at least one extruder and at least one means (19) for emptying the at least one storage chamber, which means is reciprocatable with a strokelike movement between two limit positions, wherein a working cycle ($t_Z$) of the extrusion unit has two operating phases ($t_A$, $t_S$) and in one of the operating phases ($t_S$) the at least one storage chamber is at least partially filled, with displacement of the at least one means for emptying the storage chamber, and during the other operating phase ($t_A$) the plastic material in the at least one storage chamber is advanced towards the outlet opening (10) of the extrusion head by bans of the at least one bans for emptying the storage chamber, which is moved by drive means, and a portion of the volume of the plasticised material is ejected from the outlet opening, for forming the preform, and the ejected portion by volume ($V_B$) is of a volume which is made up of a portion by volume ($V_S$) which was previously stored in the at least one storage chamber and a portion by volume ($V_E$) which during the ejection time ($t_A$) is passed into the extrusion head by the at least one extruder, and at least one part of the portion by volume is expanded under an increased internal pressure within the old cavity of a divided blow molding mold (34) which has at least two mold portions (34a, 34b) which are movable relative to each other and which define the mold cavity, and cooled, characterised in that at least once during the filling operation ($t_S$) the distance covered by and/or the speed of the at least one bans (19) for emptying the at least one storage chamber (18) is detected to ascertain the actual delivery output of the at least one extruder (10) and during the same working cycle compared in a control and regulating device (66) to reference values in respect of the distance covered and the speed respectively, which correspond to the reference delivery output of the at least one extruder (10), and during the same working cycle at least when there is a deviation exceeding a predetermined extent from at least one reference value in dependence on the result of the comparison operation at least one operating parameter of the extrusion unit (2) and/or the prescribed value of at least one operating parameter is changed so that the predetermined volume ($V_B$) for the preform (31) which is extruded immediately thereafter is ejected from the extrusion head (9) with the greatest possible degree of accuracy.

2. A process according to claim 1 characterised in that the reference delivery output of the at least one extruder (10) is ascertained from the predetermined volume ($V_B$) of the preform (31) to be ejected and the predetermined time of a working cycle ($t_Z$) in the control and regulating device (66).

3. A process according to claim 2 characterised in that the weight of the ejected preform (31) is measured and compared to a predetermined reference weight, wherein in dependence on the detected deviation the predetermined volume ($V_B$) of the preform (31) to be ejected is altered to define the reference delivery output.

4. A process according to claim 3 characterised in that the weight of at least one of the preforms (31) which were produced in a plurality of successive working cycles is measured.

5. A process according to claim 3 or claim 4 characterised in that the weight of the expanded hollow body is measured with its waste portions.

6. A process according to claim 1 characterised in that at least at the end of the filling operation ($t_S$) the speed of the at least one means (19) for emptying the at least one storage chamber (18) is detected to ascertain the actual delivery output of the at least one extruder (10).

7. A process according to claim 1 characterized in that at least at the end of the filling operation ($t_S$) the distance covered and the speed of the at least one means (19) for emptying the at least one storage chamber (18) are detected for ascertaining the actual delivery output of the at least one extruder (10).

8. A process according to claim 1 characterized in that at a plurality of moments in time during the filling operation ($t_S$) the distance covered by and/or the speed of the at least one means (19) for emptying the at least one storage chamber (18) are detected for ascertaining the actual delivery output of the at least one extruder (10).

9. A process according to claim 1 characterised in that at least during a part of the filling operation ($t_S$) the distance covered by and/or the speed of the at least one means (19) for emptying the at least one storage chamber (18) are continuously detected for ascertaining the actual delivery output of the at least one extruder (10).

10. A process according to claim 1 characterized in that a variation in the at least one operating parameter is effected in dependence on the moment in time of detection of a deviation from a reference value.

11. A process according to claim 1 characterised in that a variation in the at least one operating parameter is also effected during the working cycle ($t_Z$) of the extrusion unit (2), in which the deviation is detected.

12. A process according to claim 11 characterized in that a variation in the at least one operating parameter is also effected in the sane operating phase ($t_S$) in which the deviation is detected.

13. A process according to claim 11 characterized in that a variation in the at least one operating parameter is effected in the operating phase ($t_A$, $t_S$) of the same working cycle ($t_Z$), which phase follows the operating phase in which the deviation is detected.

14. A process according to claim 1 characterized in that, upon a deviation in the actual delivery output from the reference delivery output of the at least one extruder (10), the delivery output thereof experiences a change only when the effects of the change can be monitored in the same working cycle ($t_Z$).

15. A process according to claim 1 characterized in that, upon a deviation in the actual delivery output from the reference delivery output of the at least one extruder (10), the extent of the stroke movement of the at least one means (19) for emptying the at least one storage chamber (18) is changed for the subsequent ejection phase in order thus at least partially to compensate for the difference in amount resulting from the deviation, wherein the maximum stroke movement within the at least one storage chamber (18) is greater than the reference stroke movement of the at least one emptying means (19).

16. A process according to claim 1 characterized in that the reference stroke movement of the at least one emptying means (19) corresponds to the reference volume ($V_S$) to be stored, wherein the ratio of the reference valume ($V_S$) to be stored to the volume ($V_B$) required for a preform is equal to the ratio of the difference between the cycle time ($t_Z$) and the ejection time ($t_A$) to the cycle time ($t_Z$).

17. A process according to claim 1 characterized in that upon a deviation in the actual delivery output from the reference delivery output of the at least one extruder (10) the speed of the at least one means (19) for emptying the at least one storage chamber (18) is changed for the subsequent ejection phase in such a way that the predetermined volume ($V_B$) for a preform (31) is ejected from the extrusion head (9) with the greatest possible degree of accuracy.

18. A process according to claim 1 characterised in that the ejection speed of the at least one emptying means (19) is ascertained from the stroke movement to the performed during the ejection time, in the control and regulating device (66).

19. A process according to claim 1 characterised in that upon a deviation in the actual delivery output from the reference delivery output of the at least one extruder (10) the extent of the stroke movement and the speed of the at least one means (19) for emptying the at least one storage chamber (18) is changed for the subsequent ejection phase ($t_A$) in such a way that on the one hand the predetermined volume ($V_B$) for a preform is ejected from the extrusion head with the greatest possible level of accuracy and on the other hand the reference ejection time ($t_A$) is maintained with the greatest possible degree of accuracy.

20. A process according to claim 15 characterised in that the change in the length of the stroke movement of the at least one means (19) for emptying the at least one storage chamber corresponds to the amount of thermoplastic material which is equal to the difference between the reference delivery amount ($V_E$) and the actual delivery amount ($V_E'$, $V_E''$) of the at least one extruder (10) during the reference ejection time ($t_A$).

21. A process according to claim 20 characterised in that the amount of material which is supplied as too much or too little to the extrusion head (9) by the at least one extruder (10), by virtue of the change in the ejection time which is produced by the change in the length of the stroke cement when the ejection speed of the at least one emptying means (19) is unchanged in relation to the reference condition, is taken into consideration when changing the length of the stroke movement.

22. A process according to claim 17 characterised in that the speed during the ejection phase of the at least one emptying means (19) is so changed that in the ejection time ($t_A'$, $t_A''$) which is altered thereby, an amount of thermoplastic material ($V_E'$, $V_E''$) is conveyed into the extrusion head (9) by the at least one extruder (10), which amount corresponds to the difference between the required volume ($V_B$) to be ejected for a preform (31) and the previously stored amount ($V_S'$, $V_S''$) of the thermoplastic material.

23. A process according to claim 19 characterised in that the difference ($V_A'$) between the amount ($V_K'$) ejected by the at least one emptying bans (19) and the reference amount ($V_S$) to be stored, which difference is to be set by means of the altered length of the stroke movement of the at least one emptying means (19), corresponds to the amount of thermoplastic material which is supplied to the extrusion head (9) as too much or too little, as a result of the altered delivery output of the at least one extruder (6) during the ejection time which due to the altered speed of the at least one emptying means (19) at least approximately corresponds to the reference ejection time ($t_A$).

**Revendications**

1. Procédé pour fabriquer des corps creux moulés en matière thermoplastique, par extrusion-soufflage, en débitant une par une des ébauches de moulage (31) produites par une machine d'extrusion (2) qui comporte au moins une extrudeuse (10) alimentant en régime continu une tête d'extrusion (9) contenant au moins une chambre d'accumulation (18) pour recevoir en attente la matière plastifiée fournie par chaque extrudeuse (10), et un organe de refoulement (19) pouvant être animé d'un mouvement de va-et-vient entre deux positions extrêmes, pour vider chaque chambre d'accumulation, un cycle de fonctionnement ($t_Z$) de la machine d'extrusion (2) comportant deux phases opératoires ($t_A$, $t_S$), et chaque chambre d'accumulation étant au moins partiellement remplie pendant l'une des phases opératoires ($t_S$) par l'organe de refoulement associé, la matière plastique contenue dans chaque chambre d'accumulation étant ensuite, pendant l'autre phase opératoire ($t_A$), repoussée en direction de l'orifice de sortie (10) de la tête d'extrusion par l'organe de refoulement associé, commandé par un système d'entraînement, pour éjecter par l'orifice de sortie un certain volume de matière plastifiée destinée à réaliser l'ébauche de moulage, ce volume de matière plastifiée ainsi éjectée ayant une valeur ($V_B$) dont une partie ($V_S$) provient de la matière qui se trouvait en attente dans chaque chambre d'accumulation, et dont l'autre partie ($V_E$) a été fournie à la tête d'extrusion, pendant la durée ($t_A$) de l'éjection par le système des extrudeuses d'alimentation qui comporte au moins une extrudeuse, au moins une fraction de ce volume ($V_B$) de matière éjectée étant reçue dans le volume de moulage d'un moule de soufflage (34) comportant au moins deux parties (34a,34b) mobiles l'une par rapport à l'autre et définissant le volume de moulage dans lequel l'ébauche extrudée est mise en forme par expansion sous l'effet d'une surpression interne et ensuite refroidie, caractérisé en ce que, au moins une fois pendant la phase de remplissage ($t_S$), on note la valeur effective du trajet et/ou de la vitesse de chaque organe de refoulement (19) associé à chaque chambre d'accumulation (18) pour connaître la valeur effective du débit de chaque extrudeuse d'alimentation (10), en ce qu'on traite ces valeurs pendant le même cycle opératoire, dans un système de commande et de régulation (66) pour les comparer aux valeurs de consigne du trajet ou de la vitesse de chaque organe de refoulement, valeurs qui correspondent chacune à la valeur de consigne du débit de l'extrudeuse d'alimentation (10), et en ce qu'on corrige pendant le même cycle opératoire, au moins à partir d'un seuil prédéterminé, tout écart de fonctionnement constaté sur la machine d'extrusion (2), par rapport à au moins une valeur de consigne, à la suite de la comparaison précitée, et en ce qu'on corrige au moins l'un des paramètres de fonctionnement de la machine d'extrusion (2) et/ou la valeur de réglage correspondante, afin d'assurer avec le maximum de précision possible l'éjection du volume prédéterminé ($V_B$) de matière hors de la tête d'extrusion (9), pour réaliser l'ébauche de moulage extrudée (31) à venir dans l'immédiat.

2. Procédé selon la revendication 1, caractérisé en ce qu'on détermine dans le système de commande et de régulation (66) la valeur de consigne du débit de chaque extrudeuse (10) du système d'alimentation, d'après le volume prédéterminé ($V_B$) de matière de l'ébauche de moulage (31) à réaliser par extrusion, et la durée prédéterminée ($t_Z$) d'un cycle opératoire.

3. Procédé selon la revendication 2, caractérisé en ce que l'on mesure le poids de l'ébauche de moulage (31) réalisée par extrusion pour le comparer à un poids de consigne prédéterminé, et en ce qu'on change la valeur fixée ($V_B$) pour le volume de matière de l'ébauche de moulage (31) à réaliser par extrusion, en fonction de l'écart constaté, pour faire varier en conséquence la valeur de consigne du débit de l'extrudeuse d'alimentation.

4. Procédé selon la revendication 3, caractérisé en ce que l'on pèse au moins l'une des ébauches de moulage (31) d'un lot d'ébauches réalisées en plusieurs cycles ($t_Z$) successifs.

5. Procédé selon la revendication 3 ou 4, caractérisé en ce que l'on pèse le corps creux mis en forme par expansion, en incluant les appendices destinés à être enlevés et mis au rebut.

6. Procédé selon la revendication 1, caractérisé en ce que l'on note la vitesse de recul de chaque organe de refoulement (19) associé à chacune des chambres d'accumulation, au moins à la fin de la phase de remplissage ($t_S$), pour déterminer la valeur effective du débit de chaque extrudeuse d'alimentation (10).

7. Procédé selon la revendication 1, caractérisé en ce que l'on note le trajet et la vitesse de recul de chaque organe de refoulement (19) associé à chaque chambre d'accumulation (18), au moins à la fin de la phase de remplissage ($t_S$), pour déterminer la valeur effective du débit de chaque extrudeuse (10) du système d'alimentation.

8. Procédé selon la revendication 1, caractérisé en ce que l'on note à plusieurs reprises pendant la phase de remplissage ($t_S$) le trajet et/ou la vitesse de recul de chaque organe de refoulement (19) associé à chaque chambre d'accumulation (18), pour déterminer la valeur effective du débit de chaque extrudeuse (10) du système d'alimentation.

9. Procédé selon la revendication 1, caractérisé en ce que l'on note le trajet et/ou la vitesse de recul de chaque organe de refoulement (19) associé à chaque chambre d'accumulation (18), au moins pendant une partie de la phase de remplissage ($t_S$), pour déterminer la valeur effective du débit de chaque extrudeuse (10) du système d'alimentation.

10. Procédé selon la revendication 1, caractérisé en ce qu'on introduit la correction de réglage d'au moins l'un des paramètres de fonctionnement, suivant l'instant où l'on a constaté un écart par rapport à une valeur de consigne.

11. Procédé selon la revendication 1, caractérisé en ce qu'on corrige le réglage d'au moins un paramètre de fonctionnement dès le cycle opératoire ($t_Z$) de la machine d'extrusion (2) au cours duquel on a constaté l'écart de fonctionnement de cette machine.

12. Procédé selon la revendication 11, caractérisé en ce qu'on corrige le réglage d'au moins un paramètre de fonctionnement dès la phase opératoire ($t_S$) au cours de laquelle on a constaté l'écart de fonctionnement.

13. Procédé selon la revendication 11, caractérisé en ce qu'on corrige le réglage d'au moins un paramètre de fonctionnement pendant la phase opératoire ($t_A$,$t_S$) d'un même cycle ($t_Z$) faisant suite à la phase où l'écart a été constaté.

14. Procédé selon la revendication 1, caractérisé en ce qu'en cas d'écart de la valeur effective de débit par rapport à la valeur de consigne d'au moins une extrudeuse (10) du système d'alimentation, on ne corrige le débit de cette extrudeuse que s'il est possible de contrôler les effets de cette correction au cours du même cycle de fonctionement ($t_Z$).

15. Procédé selon la revendication 1, caractérisé en ce qu'en cas d'écart de la valeur effective du débit par rapport à la valeur de consigne du débit d'au moins une extrudeuse (10) du système d'alimentation, on corrige la course d'au moins l'un des organes de refoulement (19) associés à chaque chambre d'accumulation (18) pour la phase de refoulement à venir immédiatement, afin de compenser au moins en partie la différence de la quantité de matière refoulée due à l'écart précité, la valeur maximum de la course possible de chaque organe de refoulement concerné (19), dans la chambre d'accumulation correspondante (18), étant supérieure à la valeur de consigne prévue pour la course de cet organe.

**16.** Procédé selon la revendication 1, caractérisé en ce que la valeur de consigne de la course de chaque organe de refoulement (19) correspond à la valeur de consigne du volume ($V_S$) de matière à mettre en attente dans la chambre d'accumulation, le quotient de cette valeur de consigne ($V_S$) du volume de matière à mettre en attente dans la chambre d'accumulation, divisée par la valeur de consigne ($V_B$) du volume de matière à éjecter pour réaliser une ébauche de moulage, étant égale au quotient de la différence entre la durée du cycle oépratoire ($t_Z$) et la durée de la phase de refoulement ($t_A$), divisée par la durée du cycle ($t_Z$).

**17.** Procédé selon la revendication 1, caractérisé en ce que, en cas d'écart de la valeur effective du débit d'au moins une extrudeuse (10) du système d'alimentation, on modifie la vitesse d'au moins un organe de refoulement (19) associé à une chambre d'accumulation (18) pour la phase de refoulement à venir immédiatement, de manière à obtenir, avec le maximum de précision possible, l'éjection hors de la tête d'extrusion (9) d'une quantité de matière ayant le volume prédéterminé ($V_B$) pour réaliser une ébauche de moulage (31).

**18.** Procédé selon la revendication 1, caractérisé en ce qu'on détermine dans le système de commande et de régulation (66) la vitesse de refoulement d'au moins un organe de refoulement (19), d'après la longueur du trajet à franchir pendant la durée de la phase de refoulement.

**19.** Procédé selon la revendication 1, caractérisé en ce que, en cas d'écart de la valeur effective du débit par rapport à sa valeur de consigne pour au moins une extrudeuse (10) du système d'alimentation, on fait varier l'amplitude de la course et la vitesse d'au moins un organe de refoulement (19) associé à une chambre d'accumulation, pour la phase de refoulement ($t_A$) à venir immédiatement, de manière à respecter avec la plus grande précision possible, d'une part la valeur prédéterminée ($V_B$) du volume de matière à éjecter hors de la tête d'extrusion (9) pour réaliser une ébauche de moulage, et d'autre part la valeur de consigne ($t_A$) de la durée de la phase de refoulement.

**20.** Procédé selon la revendication 15, caractérisé en ce que l'amplitude de la course d'au moins un organe de refoulement (19) associé à une chambre d'accumulation (18) correspond à la quantité de matière thermoplastique, qui est égale à la différence entre la valeur de consigne ($V_E$) et la valeur effective ($V_E'$,$V_E''$) du débit de chaque extrudeuse concernée (10) multipliée par la durée de consigne ($t_A$) de la phase de refoulement.

**21.** Procédé selon la revendication 20, caractérisé en ce que, pour corriger l'amplitude de la course de chaque organe de refoulement (19), en raison de la variation de la durée de refoulement, on tient compte de l'excédent ou du déficit de matière fournie alors à la tête d'extrusion (9) par chaque extrudeuse d'alimentation (10), la vitesse de refoulement de chaque organe (19) étant inchangée par rapport à sa valeur de consigne.

**22.** Procédé selon la revendication 17, caractérisé en ce que l'on corrige la vitesse de refoulement de chacun des organes de refoulement (19), pour que, pendant la durée ainsi modifiée de la phase de refoulement ($t_A'$,$t_A''$), l'ensemble des extrudeuses du système d'alimentation (10) fournisse à la tête d'extrusion (9) une quantité de matière thermoplastique ($V_E'$,$V_E''$) correspondant à la différence entre le volume de consigne fixé pour la matière à éjecter ($V_B$) pour réaliser une ébauche de moulage (31), et la quantité de matière thermoplastique déjà mise en attente ($V_S'$,$V_S''$) dans la chambre d'accumulation.

**23.** Procédé selon la revendication 19, caractérisé en ce que la différence de quantité de matière ($V_A'$) à obtenir par réglage, entre la quantité ($V_K'$) éjectée par l'ensemble des organes de refoulement (19), et la quantité de consigne à mettre en attente ($V_S$) dans la chambre d'accumulation, différence résultant de la modification de l'amplitude de la course des organes de refoulement (19), correspond à la quantité de matière thermoplastique fournie en excédent à la tête d'extrusion (9), ou en déficit dans celle-ci, en raison du débit modifié de chaque extrudeuse d'alimentation (10) pendant la durée du refoulement qui correspond au moins approximativement à la valeur de consigne ($t_A$), de la phase de refoulement, par suite de la modification de la vitesse de chaque organe de refoulement (19).

FIG.1

FIG.2

# FIG.3

FIG. 4

# FIG.5

# FIG.6

FIG.7

# FIG.8

FIG.8A

FIG.9

FIG.10